# EUROPEAN PATENT APPLICATION

(11) **EP 4 637 254 A1**
(43) Date of publication of application: **22.10.2025**
(21) Application number: 24170439.4
(22) Date of filing: 16.04.2024
(51) Int. Cl.: H04W 74/0833, H04W 76/15, H04W 88/08

(54) **METHODS, APPARATUS, AND COMPUTER PROGRAMS FOR MULTI TRP RANDOM ACCESS IN A RADIO COMMUNICATION SYSTEM**

(71) Applicant: Nokia Technologies Oy, 02610 Espoo (FI)
(72) Inventor: CAPORAL DEL BARRIO, Samantha, Aalborg (DK); HAKOLA, Sami-Jukka, Kempele (FI); KARJALAINEN, Juha Pekka, Sotkamo (FI); KOSKELA, Timo, Oulu (FI)
(74) Representative: Nokia EPO representatives

(57) **Abstract**

This specification describes methods, apparatus and/or computer programs for concurrent random access (RA) for multi transmission and reception point (mTRP) communication in a radio communication system. According to a first aspect of this specification, there is described a terminal device which comprises: means for obtaining first information indicating that concurrent Random Access (RA) procedures are allowed in a cell of a radio communication system operating with multiple transmit-receive points (TRPs); means for determining that the apparatus is capable of performing mTRP communication; and means for, when concurrent RA procedures are allowed in the cell, and when the apparatus is capable of performing mTRP communication, concurrently performing at least a first RA procedure with a first TRP of the cell and a second RA procedure with a second TRP of the cell.

## Description

### Field

This specification relates to concurrent random access (RA) for multi transmission and reception point (mTRP) communication in a radio communication system.

### Background

In essence, mTRP communication enables network nodes or devices (e.g., NNs, gNBs) to use more than one TRP to communicate with a given terminal device or user equipment (UE). 5G New Radio (NR) has been enhanced with mTRP functionalities since the second Release, i.e. since Release 16. In addition, it is expected that 6G will have mTRP as the supported scenario from the first Release of 6G. This is because the mTRP scenario is required to provide capacity, coverage and latency improvements compared to 5G NR.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus comprising: means for obtaining first information indicating that concurrent Random Access (RA) procedures are allowed in a cell of a radio communication system operating with multiple transmit-receive points (TRPs); means for determining that the apparatus is capable of performing multi transmit-receive point (mTRP) communication; and means for, when concurrent RA procedures are allowed in the cell, and when the apparatus is capable of performing mTRP communication, concurrently performing at least a first RA procedure with a first TRP of the cell and a second RA procedure with a second TRP of the cell.

In some example embodiments, the apparatus, wherein concurrently performing the first and second RA procedures comprises triggering performance of the first RA procedure with the first TRP, and triggering performance of the second RA procedure with the second TRP before completion of the first RA procedure.

In some example embodiments, the apparatus, wherein the first RA procedure is a 4-step RA procedure or a 2-step RA procedure, and the second RA procedure is a 4-step RA procedure or a 2-step RA procedure.

In some example embodiments, the apparatus, further comprising: means for indicating, in a 4-step RA Msg3 or 2-step RA MsgA of the first and/or second RA procedure, that mTRP communication applies for uplink communication only, for downlink communication only, or for both uplink communication and downlink communication.

In some example embodiments, the apparatus, further comprising: means for receiving a common temporary cell radio network temporary identifier (TC-RNTI) in a first 4-step RA Msg2 or 2-step RA MsgB received from the first TRP during the first RA procedure, and in a second 4-step RA Msg2 or 2-step RA MsgB received from the second TRP during the second RA procedure.

In some example embodiments, the apparatus, further comprising: means for sending a common cell radio network temporary identifier (C-RNTI) in a first 4-step RA Msg3 or 2-step RA MsgA to the first TRP, and in a second 4-step RA Msg3 or 2-step RA MsgA to the second TRP.

In some example embodiments, the apparatus, further comprising: means for sending a common control channel (CCCH) service data unit (SDU) in a first 4-step RA Msg3 or 2-step MsgA transmitted to the first TRP during the first RA procedure, and in a second 4-step RA Msg3 or 2-step MsgA transmitted to the second TRP during the second RA procedure.

In some example embodiments, the apparatus, further comprising: means for receiving a common user equipment (UE) contention resolution identity medium access control (MAC) control element (CE) comprising a CCCH SDU in a first 4-step RA Msg4 or 2-step MsgB received from the first TRP during the first RA procedure, and in a second 4-step RA Msg4 or 2-step MsgB received from the second TRP during the second RA procedure.

In some example embodiments, the apparatus, further comprising: means for obtaining second information indicating a subset of physical random access channel (PRACH) resources to be used for concurrent RA procedures, and means for transmitting a first 4-step RA Msg1 or 2-step RA MsgA to the first TRP during the first RA procedure using a first PRACH resource of the subset of PRACH resources, and a second 4-step RA Msg1 or 2-step RA MsgA to the second TRP during the second RA procedure using a second PRACH resource of the subset of PRACH resources.

In some example embodiments, the apparatus, wherein the subset of PRACH resources is organized into groups of N PRACH resources to be used for concurrent RA procedures with N TRPs respectively.

In some example embodiments, the apparatus, further comprising: means for obtaining third information indicating that the cell operates with multiple TRPs.

In some example embodiments, the apparatus, wherein the third information comprises an indication that multiple timing advances (TAs) are supported in the cell for uplink transmission to the multiple TRPs.

In some example embodiments, the apparatus, wherein determining that the apparatus is capable of performing mTRP communication further comprises determining that one of the following applies: a) an antenna arrangement of the apparatus is capable of simultaneously receiving signals from multiple TRPs for downlink communications; b) an antenna arrangement of the apparatus is capable of simultaneously transmitting signals to multiple TRPs for uplink communications; and c) an antenna arrangement of the apparatus is capable of simultaneously transmitting and receiving signals to/from multiple TRPs for both uplink and downlink communications.

In some example embodiments, the apparatus, further comprising: means for determining, from signal measurements, that signals from the first TRP and the second TRP can be received simultaneously, and wherein the first RA procedure and the second RA procedure are performed concurrently when the signals from the first TRP and the second TRP can be received simultaneously.

In some example embodiments, the apparatus, wherein the first RA procedure and the second RA procedure are performed concurrently when powers or strengths of the signals from the first TRP and the second TRP are above a threshold and/or when powers or strengths of the signals from the first TRP and the second TRP are no more than a threshold apart from each other.

In some example embodiments, the apparatus, wherein the first information and/or the second information and/or the third information are obtained via one or more of: system information; minimum system information; remaining minimum system information; dedicated MAC CE signalling; or dedicated RRC signalling.

In some example embodiments, the apparatus, wherein the system information further comprises information indicating groups of signal synchronisation block (SSB) indexes associated with respective TRPs.

According to a second aspect, there is provided a network apparatus comprising: means for transmitting first information indicating that concurrent RA procedures are allowed in a cell of a radio communication system operating with multiple TRPs; and means for, when concurrent RA procedures are allowed in the cell, concurrently performing at least a first RA procedure with a terminal apparatus via a first TRP of the cell and a second RA procedure with the terminal apparatus via a second TRP of the cell.

In some example embodiments, the network apparatus, wherein concurrently performing the first and second RA procedures comprises performing the first RA procedure with the terminal apparatus via the first TRP, and performing the second RA procedure with the terminal apparatus via the second TRP before completion of the first RA procedure.

In some example embodiments, the network apparatus, wherein the first RA procedure is a 4-step RA procedure or a 2-step RA procedure, and the second RA procedure is a 4-step RA procedure or a 2-step RA procedure.

In some example embodiments, the network apparatus further comprising: means for receiving, from the terminal apparatus, an indication, in a 4-step RA Msg3 or 2-step RA MsgA of the first and/or second RA procedure, that multi transmit-receive point, mTRP, communication applies for uplink communication only, for downlink communication only, or for both uplink communication and downlink communication.

In some example embodiments, the network apparatus further comprising: means for sending, to the terminal apparatus, a common TC-RNTI in a first 4-step RA Msg2 or 2-step RA MsgB via the first TRP during the first RA procedure, and in a second 4-step RA Msg2 or 2-step RA MsgB via the second TRP during the second RA procedure.

In some example embodiments, the network apparatus further comprising: means for receiving, from the terminal apparatus, a common C-RNTI in a first 4-step RA Msg3 or 2-step RA MsgA via the first TRP, and in a second 4-step RA Msg3 or 2-step RA MsgA via the second TRP.

In some example embodiments, the network apparatus further comprising: means for receiving, from the terminal apparatus, a CCCH SDU in a first 4-step RA Msg3 or 2-step MsgA via the first TRP during the first RA procedure, and in a second 4-step RA Msg3 or 2-step MsgA via the second TRP during the second RA procedure.

In some example embodiments, the network apparatus further comprising: means for sending, to the terminal apparatus, a common UE contention resolution identity MAC CE comprising a CCCH SDU in a first 4-step RA Msg4 or 2-step MsgB via the first TRP during the first RA procedure, and in a second 4-step RA Msg4 or 2-step MsgB via the second TRP during the second RA procedure.

In some example embodiments, the network apparatus further comprising: means for transmitting second information indicating a subset of PRACH resources to be used for concurrent RA procedures, and means for receiving, from the terminal apparatus, a first 4-step RA Msg1 or 2-step RA MsgA via the first TRP during the first RA procedure using a first PRACH resource of the subset of PRACH resources, and a second 4-step RA Msg1 or 2-step RA MsgA via the second TRP during the second RA procedure using a second PRACH resource of the subset of PRACH resources.

In some example embodiments, the network apparatus, wherein the subset of PRACH resources is organized into groups of N PRACH resources to be used for concurrent RA procedures with N TRPs respectively.

In some example embodiments, the network apparatus further comprising: means for transmitting third information indicating that the cell operates with multiple TRPs.

In some example embodiments, the network apparatus, wherein the third information comprises an indication that multiple TAs are supported in the cell for uplink transmission to the multiple TRPs.

In some example embodiments, the network apparatus, wherein the first information and/or the second information and/or the third information are transmitted via one or more of: system information; minimum system information; remaining minimum system information; dedicated MAC CE signalling; or dedicated Radio Resource Control, RRC, signalling.

In some example embodiments, the network apparatus, wherein the system information further comprises information indicating groups of SSB indexes associated with respective TRPs.

According to a third aspect, there is provided a method for an apparatus, the method comprising: obtaining first information indicating that concurrent RA procedures are allowed in a cell of a radio communication system operating with multiple TRPs; determining that the apparatus is capable of performing mTRP communication; and when concurrent RA procedures are allowed in the cell, and when the apparatus is capable of performing mTRP communication, concurrently performing at least a first RA procedure with a first TRP of the cell and a second RA procedure with a second TRP of the cell.

In some example embodiments, the third aspect may include any other steps or features mentioned with respect to the apparatus of the first aspect.

According to a fourth aspect, there is provided a method for a network apparatus, the method comprising: transmitting first information indicating that concurrent RA procedures are allowed in a cell of a radio communication system operating with multiple TRPs; and when concurrent RA procedures are allowed in the cell, concurrently performing at least a first RA procedure with the terminal apparatus via a first TRP of the cell and a second RA procedure with the terminal apparatus via a second TRP of the cell.

In some example embodiments, the fourth aspect may include any other steps or features mentioned with respect to the network apparatus of the second aspect.

According to a fifth aspect, there is provided a non-transitory computer-readable medium having stored thereon computer-readable code, which, when executed by at least one processor, causes the at least one processor to perform a method, comprising: obtaining first information indicating that concurrent RA procedures are allowed in a cell of a radio communication system operating with multiple TRPs; determining that the apparatus is capable of performing mTRP communication; and when concurrent RA procedures are allowed in the cell, and when the apparatus is capable of performing mTRP communication, concurrently performing at least a first RA procedure with a first TRP of the cell and a second RA procedure with a second TRP of the cell.

In some example embodiments, the fifth aspect may include any other step or feature mentioned with respect to the method of the third aspect.

According to a sixth aspect, there is provided a non-transitory computer-readable medium having stored thereon computer-readable code, which, when executed by at least one processor, causes the at least one processor to perform a method, comprising: transmitting first information indicating that concurrent RA procedures are allowed in a cell of a radio communication system operating with multiple TRPs; and when concurrent RA procedures are allowed in the cell, concurrently performing at least a first RA procedure with the terminal apparatus via a first TRP of the cell and a second RA procedure with the terminal apparatus via a second TRP of the cell.

In some example embodiments, the sixth aspect may include any other step or feature mentioned with respect to the method of the fourth aspect.

According to a seventh aspect, there is provided a computer-readable medium comprising instruction code stored thereon which, when executed by one or more processors, causes the one or more processors to perform the method of the third aspect.

According to an eighth aspect, there is provided a computer-readable medium comprising instruction code stored thereon which, when executed by one or more processors, causes the one or more processors to perform the method of the fourth aspect.

### Brief Description of the Figs.

For better understanding of the present application, reference will now be made by way of example to the accompanying drawings in which:
FIG. 1 is a schematic diagram illustrating a cell with multiple TRPs communicating with a plurality of terminal devices in a radio communication system;
FIG. 2 is a signalling flow diagram illustrating various messages that may be transmitted, and operations that may be performed, in accordance with various examples described herein;
FIGs. 3a and 3b are schematic diagrams illustrating concurrent mTRP RA in accordance with various examples described herein;
FIG. 4a is an example message flow diagram illustrating various messages that may be transmitted, and operations that may be performed, in accordance with various examples described herein;
FIG. 4b is an example message flow diagram illustrating various messages that may be transmitted, and operations that may be performed, in accordance with various examples described herein;
FIG. 4c is an example message flow diagram illustrating various messages that may be transmitted, and operations that may be performed, in accordance with various examples described herein;
FIG. 5 is a flowchart illustrating various operations which may be performed by a terminal device in accordance with various examples described herein;
FIGs. 6a and 6b are flowcharts illustrating various operations which may be performed by a terminal device and a network node, respectively, in accordance with various examples described herein;
FIG. 7 is a schematic illustration of an example configuration of a terminal device which may be configured to perform various operations described with reference to FIGs. 1 to 6a;
FIG. 8 is a schematic illustration of an example configuration of a network node which may be configured to perform various operations described with reference to FIGs. 1 to 6b; and
FIG. 9 is an illustration of a computer-readable medium upon which computer readable code may be stored.

### Detailed Description

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.

In the description and drawings below, like reference numerals refer to like elements throughout.

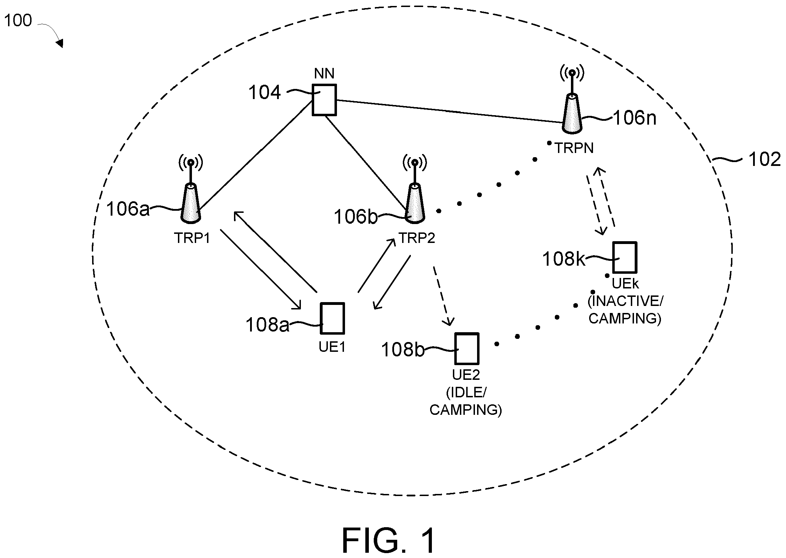

FIG. 1 is a schematic diagram illustrating a cell 102 of a radio communication system 100 in which the cell 102 is operated by a network node (NN) 104 connected to a plurality of transmit-receive points (TRPs) or multiple TRPs 106a, 106b, to 106n. A plurality of terminal devices or apparatus 108a, 108b to 108k are located within the cell 102 of NN 104. Fifth Generation (5G) New Radio (NR) has been enhanced with multiple (mTRP) functionalities since the second Release, i.e. since Release 16, in which a terminal device 108a may perform mTRP communication with NN 104 via multiple TRPs 106a and 106b. It is expected that Sixth Generation (6G) would have mTRP as the supported scenario from the first Release of 6G, since the mTRP scenario is required to provide capacity, coverage and latency improvements compared to 5G NR. Put simply, mTRP communication enables NN 104 (e.g. gNBs) to use more than one of the TRPs 106a-106n to communicate with a given terminal device 108a. In this example, the first terminal device 108a is in an RRC_CONNECTED state and performing mTRP communication with NN 104 via TRPs 106a and 106b. A second terminal device 108b is in an RRC_IDLE state and camped in the cell 102, and a third terminal device 108k is in an RRC_INACTIVE state and camped in the cell 102.

In this example, the cell 102 is a serving cell for the first terminal device 108a (e.g., UE1) in the RRC_CONNECTED state. The first terminal device 108a is performing multiple TRP communication with NN 104 via a first TRP 106a and a second TRP 106b using uplink and downlink data and/or signalling channels with respect to both the first and second TRPs 106a and 106b. The second terminal device 108b located within the cell 102 operated by NN 104 is in the RRC_IDLE state and camped in the cell 102. The RRC_IDLE state corresponds to the initial mode when the terminal device is powered up in a dormant state, where the terminal device 108b is not actively engaged in communication. The third terminal device 108k located within the cell 102 operated by NN 104 is in the RRC_INACTIVE state and camped in the cell 102. The RRC_INACTIVE state corresponds to the where the terminal device is powered up but is not in an RRC_CONNECTED state or RRC_IDLE state, in this case, the terminal device 108k is at least partially actively engaged in communicating with NN 104. The RRC_INACTIVE state enables faster RRC connection establishment compared to when a terminal device is in the RRC_IDLE state. The cell 102 is a camping cell from the perspective of terminal devices 108b and 108k.

When in the RRC_IDLE state, the terminal device 108b initiates its transition to RRC_CONNECTED state for engaging in active communication (e.g., data transfer or voice calls) by triggering and completing Random Access (RA) and Radio Resource Control (RRC) connection establishment procedures with NN 104 via one of the TRPs 106a-106n. The third terminal device 108k is in the RRC_INACTIVE state, which is an intermediate state between RRC_IDLE and RRC_CONNECTED that alleviates network signalling load and reduces latency when third terminal device 108k transitions to RRC_CONNECTED state. Although the third device 108k may be engaged in some "low level" signalling / paging communications, the third terminal device 108k is not actively engaged in active communication (e.g., data transfer or voice calls etc.). When in RRC_INACTIVE state, the terminal device 108b initiates is transition to RRC_CONNECTED state for engaging in active communication (e.g., data transfer or voice calls) by triggering an RA procedure and RRC Resume procedure with NN 104 via one of the TRPs 106a-106n.

In current 5G NR, the Third Generation Partnership Project (3GPP) defined RA procedures (also known as RACH) that can be used in, without limitation, for example Initial Access from RRC_IDLE state, small data transmissions when in INACTIVE state and transition from RRC_INACTIVE to RRC_CONNECTED, during Beam Failure Detection (BFD) as part of the Beam Failure Recovery, connection re-establishment, handover, cell addition, and the like. The types of RA procedure described herein is the Contention based RA (CBRA) procedure. There are two RA procedures available to the terminal device 108a, which include a 4-step RA procedure and a 2-step RA procedure . According to 3GPP 38.321 V18.0.0 Rel 18, current 5G NR only allows one RA procedure attempt at a time and the terminal device has to initiate the timer (ra-ResponseWindow) and wait for a response/failure detection of the current RA procedure before triggering another RA procedure.

In NR mTRP deployment, the terminal device 108a needs to be capable of mTRP communication. For example, the terminal device 108a requires at least the hardware capabilities to perform mTRP communication. For example, in FIG. 1 the terminal device 108a has an antenna arrangement that is capable of reliably and simultaneously transmitting and/or receiving signals to/from multiple TRPs 108a-108b for uplink and/or downlink communications in RRC_CONNECTED state (e.g., via Physical Downlink Control Channel (PDCCH)/Physical Downlink Shared Channel (PDSCH) and/or Physical Uplink Control Channel (PUCCH)/Physical Uplink Shared Channel (PUSCH)).

Conventionally, when starting from an RRC_IDLE or RRC_INACTIVE state, which the terminal device 108a may have entered from a previous communication session or on Initial Access etc., the terminal device 108a needs to first establish an RRC connection with NN 104 via a single TRP 106a of the TRPs 106a-106n. Once RRC connection is established (after a lengthy delay), and if mTRP communication is supported by both the NN 104 and the terminal device 108a, the terminal device 108a may be configured through RRC signalling for multi-TRP (mTRP) communication with the TRP 106a and another TRP 106b of the remaining TRPs 106b-106n. The terminal device 108a may be further configured to include one or more additional TRPs for mTRP communication. Thus, the terminal device 108a experiences a severe latency to fully establish mTRP communication with NN 104 via multiple TRPs 106a-106b.

For example, in FIG. 1, the terminal device 108a would have established its current mTRP communication via the first TRP1 104a and second TRP2 104b by initially performing a first RA procedure (e.g., a 2-step or 4-step RA procedure) and, if successful, subsequently establishing an RRC connection with the NN 104 via the first TRP1 104a. Once the uplink and downlink communication are established and terminal device 108a is in the RRC_CONNECTED state with NN 104 via the first TRP 106a, the NN 104 may indicate that it supports mTRP communication and may send mTRP configuration to the terminal device 108a.

The terminal device 108a is then allowed to detect the next TRP of the TRPs 106b-106n in the cell 102. This will typically be the next TRP with a synchronization signal block (SSB) having the greatest power level above a certain power level threshold (e.g., detect the next TRP with the strongest SSB). For example, the terminal device 108a detects that the second TRP 106b has an SSB with the greatest power level above the certain power level threshold. Once detected, the terminal device 108a triggers a second RA procedure (e.g., 2-step or 4-step RA procedure) with NN 104 via the second TRP 106b. Then, the terminal device 108a has established mTRP communication with NN 104 via the first and second TRPs 106a and 106b.

However, for additional communication via one or more further TRPs, the above sequential RA procedure with the one or more further TRPs is repeated. This assumes the terminal device 108a is capable of supporting more TRPs for mTRP communication, and the NN 104 is capable of supporting mTRP communication with terminal device 108a over more than two TRPs.

Unfortunately, the sequential nature of current RA procedures for mTRP communication is very lengthy and causes severe latency. For example, this is due to the terminal device 108a having to sequentially connect with NN 104 via each TRP separately because mTRP connection relies on group-based beam reporting from the terminal device 108a, which can only be configured after the terminal device 108a enters RRC_CONNECTED state. In addition, for the terminal device 108a to report the beam groups that may be simultaneously received/transmitted on, the terminal device 108a requires information on which SSB beams belong to which of the TRPs 106a-106n. This association is only available to terminal device 108a via the *CoresetPoolIndex* configuration, which is also only given to the terminal device 108a when it is in the RRC_CONNECTED state. For example, in RRC_CONNECTED state and after addition of the TCI states to the activated list, the terminal device 108a has the indication of SSB grouping per *CoresetPoolIndex.* However, this information is not available to the terminal device 108a when starting from the RRC_IDLE/RRC_INACTIVE states. The above-mentioned sequential mTRP connection setup causes unnecessary delays and makes it challenging to establish mTRP communication for, without limitation, Ultra Reliable Low Latency Communications (URLLC), Enhanced Mobile Broadband (eMBB), Massive Machine Type Communications (mMTC)) and the like. There is a need to reduce the unnecessary delays and latency caused by current sequential mTRP communication establishment procedures.

This specification proposes various example mechanisms for facilitating low latency establishment of mTRP communication with NN 104. Although this is particularly applicable for when the terminal device 108b or 108k is in an RRC_IDLE and/or RRC_INACTIVE state and camping on cell 102, the terminal device 108b and 108k may also benefit when in other states or during Beam Failure Detection. Rather than performing sequential RA procedures to establish mTRP communication, the terminal device 108b or 108k can be configured to initiate concurrent RA procedures, if allowed in the RA configuration of the cell 102 provided by the NN 102.

For example, when starting from, for example, the RRC_IDLE or RRC_INACTIVE states, a terminal device 108b or 108k may be configured to obtain concurrent RA information (e.g., via system information or other configuration information) that indicates concurrent RA procedures are allowed and/or supported in the cell 102 operated by NN 104 of radio communication system 100 when the NN 104 operates with multiple TRPs 106a-106n. For example, the NN 104 may broadcast as the concurrent RA information, first information indicating concurrent RA procedures are allowed in the cell 102. The terminal devices 108b or 108k may receive the broadcast and obtain the first information indicating concurrent RA procedures are allowed. Once the first information is received or obtained, the terminal device 108b or 108k also determines that the terminal device 108b or 108k is capable of performing mTRP communication. For example, the terminal device 108b or 108k determines that the antenna arrangement of the terminal device 108b or 108k is capable of performing mTRP communication with two or more TRPs 106a-106n for uplink, downlink, or both uplink and downlink communication.

When concurrent RA procedures are allowed and/or supported in the cell 102 operated by NN 104, and when the terminal device 108b or 108k is capable of performing mTRP communication, the terminal device 108b or 108k concurrently performs at least a first RA procedure with NN 104 via a first TRP of the cell 102, for instance the TRP1 106a, and a second RA procedure with NN 104 via a second TRP of the cell 102, for instance the TRP2 106b. In this example, the terminal device 108b or 108k concurrently performs at least two RA procedures for each of the first and second TRP 106a and 106b. It is to be appreciated by the skilled person that multiple RA procedures, e.g., three or more RA procedures, may be performed depending on the capabilities of the terminal devices 108b and 108k and/or depending on whether the NN 104 allows and/or supports mTRP communication with more than two TRPs per terminal device.

Concurrently performing the first and second RA procedures by the terminal device 108b or 108k may include, without limitation, for example performing the first and second RA procedures in parallel, simultaneously, or in an interleaved manner. For example, parallel or simultaneously performing the first and second RA procedure may include using the same time slots but different sets of resource blocks for transmitting the respective RA messages of the first or second RA procedure from the terminal device 108b or 108k via the respective uplink channels and/or from the NN 104 via the respective downlink channels. In another example, parallel or simultaneously performing the first and second RA procedure may include within the same radio frame(s) or sub-frame(s) but different time slots/sets of resource blocks of the frame(s) or sub-frame(s) when the terminal device or NN 104 transmit their respective RA messages for the first or second RA procedure via the respective uplink channels and/or respective downlink channels. Concurrent performance may include interleaving the performance of the first and second RA procedures such that the RA messages of the first RA procedure or a subset thereof are interleaved with the RA messages of the second RA procedure or a subset thereof.

Concurrently performing the first and second RA procedures may include triggering performance of the first RA procedure with NN 104 via the first TRP 106a, and triggering performance of the second RA procedure with NN 104 via the second TRP 106b before (successful or unsuccessful) completion of the first RA procedure.

Concurrently performing RA procedures between a terminal device 108b and the NN 104 via TRPs 106a to 106n requires coordination at the network side for ensuring concurrent RA procedures are linked to the same terminal device 108b and respective TRPs 106a-106n for which the concurrent RA procedures are being performed with. This is to enable the NN 104 to be able to identify the TRPs 106a-106n that mTRP communication is being requested for and to identify the terminal 108b or 108k making the requests for mTRP communication. For example, the NN 104 may have a common or centralised Medium Access Control (MAC) layer that interfaces with the corresponding TRPs 106a-106n (e.g., via backhaul/fronthaul/internal links with two PHY layers at respective TRPs), which may be used to track and link the concurrent RA procedures being performed via terminal 108b or 108k with respective TRPs 106a-106n. In another example, two MAC layers at respective TRPs 106a-106n may coordinate their operation together with NN 104 via messaging/signalling between the TRPs 106a-106n. In other examples, in the case of mDCI and/or non-ideal backhaul, multiple TRPs 106a-106n may have all the necessary information and would perform the scheduling independently. Although a centralised MAC layer, distributed MAC layers, or independent scheduling by TRPs 106a-106n may be used to coordinate the concurrent RA procedures and subsequent mTRP communication between terminal device 108b and NN 104 via TRPs 106a to 106n, this is by way of example only, it is to be appreciated by the skilled person that other suitable signalling architectures for coordinating concurrent RA procedures in relation to terminal device 108b and NN 104 via respective two or more TRPs 106a-106n may be used as the application demands. In an example, the concurrent RA information obtained by the terminal device 108b or 108c may include first information comprising data representative or indicating that the NN 104 supports concurrent RA procedures (e.g., 2-step and/or 4-step concurrent RA procedures).

The concurrent RA information obtained by the terminal device 108b or 108k may include further information indicating that NN 104 supports concurrent RA procedures for establishing mTRP communication with terminal devices 108b or 108k. For example, the further information may include second information including data representative of or indicating physical random access channel (PRACH) resources to be used for concurrent RA procedures. For example, a subset of PRACH resources may be used for concurrent RA procedures with multiple TRPs. The PRACH resources may include, without limitation, for example PRACH preambles or PRACH occasions. The subset of PRACH resources can be organized into groups of *N* PRACH resources to be used for concurrent RA procedures with *N* TRPs, respectively, where *N*>=2. Thus, PRACH resources may be used to indicate concurrent RA procedures are being performed for mTRP communication. PRACH resources can be used to indicate whether single RA procedure (e.g., conventional sequential mTRP) can only be used in the cell 102 operated by NN 104, or whether concurrent RA procedures is supported for low latency mTRP communication establishment in the cell 102 operated by NN 104. The second information may further indicate whether the PRACH resources are for use with mTRP operation for uplink communication only, for downlink communication only, and/or for both uplink and downlink communications, in relation to one or more of the TRPs 106a-106n in cell 102.

In another example, the concurrent RA information may include third information including data representative of or indicating that the NN 104 or the cell 102 operates with multiple TRPs 106a-106n, e.g., at least 2 TRPs. In an example, the third information may include an indication that multiple TA values are supported by the NN 104 of the cell 102 for uplink transmission from the terminal device 108b or 108k to the NN 104 via corresponding multiple TRPs 106a-106n. The multiple TAs may be at least 2 TA values for use with at least two of the multiple TRPs 106a-106n. That is, whether at least 2 TA values are associated with the cell 102. The indication that multiple TAs are supported in the cell for uplink transmission to the multiple TRPs.

In a further example, the concurrent RA information obtained by the terminal device 108b or 108k may further include data representative of or indicating an association between at least one SSB index and a TRP for use in mTRP communication. For example, the concurrent RA information may further include information indicating groups of SSB indexes associated with respective TRPs. In another example, the information indicating groups of SSB indexes associated with respective TRPs may further include an indication that these groups of SSB indexes are for use in mTRP communication or mTRP communication establishment.

The concurrent RA information obtained by the terminal device 108b or 108k may include at least one or more of the first information and/or the second information and/or the third information, and/or other information associated with supporting concurrent RA procedures in the cell 102 operated by NN 104. The concurrent RA information may be obtained via one or more of: system information sent from the NN 104 (e.g., broadcast or transmitted to a particular terminal using dedicated signalling) such as, without limitation, for example, a minimum information block (MIB), system information block 1 (SIB1) or other system information (OSI); minimum system information such as, without limitation, for example MIB and SIB1; remaining minimum system information such as, without limitation, for example SIB1; dedicated Medium Access Control (MAC) Control Element (CE) signalling; or dedicated RRC signalling; and/or any other suitable type of broadcast transmission, dedicated control signalling that are configured to provide the necessary information associated with NN 104 for indicating to the terminal device 108b or 108k that NN 104 supports mTRP communication and provides the essential concurrent RA information that allows concurrent RA procedures to be performed for mTRP communication establishment between terminal devices 108a-108k and the NN 104. The system information may further include, without limitation, information indicating groups of SSB indexes associated with respective TRPs.

During performance of concurrent RA procedures for the terminal devices 108b or 108k, should the first RA procedure with NN 104 via the first TRP 106a successfully complete before the second RA procedure completes, then an RRC connection for the terminal device 108b or 108k is established via TRP 106a, and the terminal device 108b or 108k can start performing single TRP communication. When the second RA procedure with NN 104 via the second TRP 106b successfully completes (i.e., the terminal device 108b or 108k establishes a connection with NN 104 via second TRP 106b), then the terminal device 108b or 108k starts performing mTRP communication with NN via inter alia first and second TRPs 106a and 106b. If one of the first or second RA procedures is unsuccessful for the terminal device 108b or 108k, then given at least one of the RA procedures is successful means the terminal device 108b or 108k will fall back to the single TRP (sTRP) communication. In such a case, the terminal device 108b or 108k will still have the potential at a later stage to move to mTRP communication, where one or more further additional RA procedures may be performed to establish mTRP communication whilst the terminal 108b or 108k performs sTRP communication. If there are two or more further additional RA procedures the terminal requires to establish mTRP communication whilst it is performing sTRP communication, then these two or more further additional RA procedures may be performed as concurrent RA procedures as described herein.

In an example, each of the concurrent RA procedures may be based on either a 2-step RA procedure or a 4-step RA procedure. Each 2-step or 4-step RA procedure of the concurrent RA procedures may include an RRC Setup/Resume Request message in Msg3/MsgA and RRC Setup/Resume response message in Msg4/MsgB. This ensures that the first successful RA procedure with a first TRP 106a of the TRPs 106a-106n results in the terminal 108b or 108k transitioning from the RRC_IDLE/INACTIVE or camping state to the RRC_CONNECTED state for the first TRP 106a, and so it can perform sTRP communication via the first TRP 106a. Thereafter, once the terminal 108b or 108k is in the RRC_CONNECTED state for the first TRP 106a, subsequent concurrent RA procedures for other TRPs 106b-106n successfully completing means that the NN 104 can add each of the other TRPs 106b-106n corresponding to a successfully completed RA procedure to the mTRP configuration of terminal 108b or 108k. In these cases, the RRC Setup/Resume Request message in Msg3/MsgA and RRC Setup/Resume response message in Msg4/MsgB are used by terminal 108b or 108k and NN 104 for configuring/confirming the subsequent TRPs 106b-106n are for use in the mTRP communication. The terminal 108b or 108k may then perform mTRP communication. In this example, even if one RRC state machine is maintained at terminal 108b or 108k and NN 104, the concurrent RA procedures convey two parallel RRC Setup/Resume procedures and corresponding RRC messages with the same or similar RRC message content (e.g., with the same or different RRC transaction IDs), these can be used by the NN 104 for configuring or confirming the configuration of the mTRP communication with terminal 108b or 108k and TRPs 106a-106n.

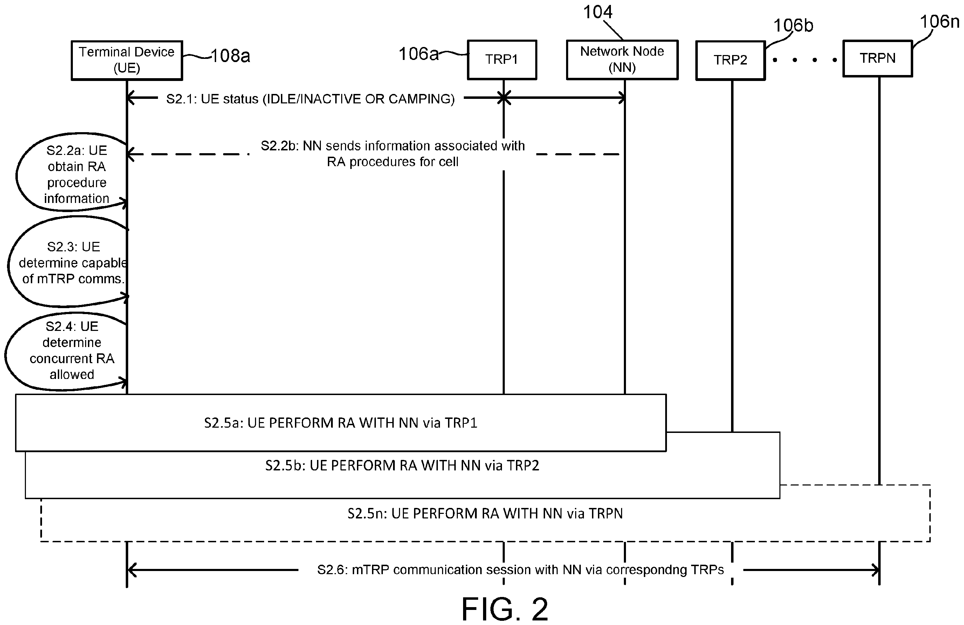

FIG. 2 is an example signalling flow diagram of the various messages and operations performed between the NN 104 and terminal device 108a (e.g., a UE) that may be transmitted for establishing mTRP communication therebetween.

In operation S2.1, the terminal device 108a starts, without limitation, for example in an RRC_IDLE state and/or an RRC_INACTIVE state and may be camping in the cell 102 of the NN 104. In these states there may be some signalling occurring between the terminal device 108a and the NN 104 via a first TRP1 106a.

In operation S2.2a, the terminal device 108a obtains concurrent RA procedure information, which may include first information indicating that concurrent RA procedures are allowed in the cell 102 of the NN 104 of the radio communication system 100 in which the NN 104 is operating multiple TRPs 106a-106n. The concurrent RA information may also include second and/or third information as described with reference to FIG. 1. In an example, the terminal device 108a may acquire this first information from the NN 104 previously or another NN in another cell and may have stored the concurrent RA information for cell 102 operated by NN 104 in a local database and the like. In another example, as an option, the NN 104 sends via the first TRP 106a or broadcasts via multiple TRPs 106a-106n, the concurrent RA information for the cell 102, which may include the first information indicating concurrent RA procedures are allowed in the cell 102 of the NN 104 and that the NN 104 is operating with multiple TRPs 106a-106n, and/or other information (e.g., second and/or third information) enabling the terminal device 108a to perform concurrent RA procedures with two or more TRPs 106a-106n of the cell 102. The NN 104 may broadcast the concurrent RA information over a broadcast channel using one or more of the TRPs 106a-106n. Alternatively or additionally, the NN 104 may directly signal the terminal device 108a data representative or indicating the concurrent RA information associated with concurrent RA procedures.

In operation S2.3, the terminal device 106a determines that it is capable of mTRP communications. For example, for mTRP communication, the terminal device 108a may determine that it has the hardware capabilities to perform mTRP communication. As an example, the terminal device 108a has an antenna arrangement that is capable of simultaneously transmitting and receiving signals to/from multiple TRPs 108a-108b for either uplink communication, downlink communication, and/or both uplink and downlink communications when in RRC_CONNECTED state (e.g., PSCCH/PDSCH and PUCCH/PUSCH).

In operation S2.4, the terminal device 108a determines that concurrent RA procedures are allowed and supported in cell 102 operated by the NN 104 based on the obtained concurrent RA information. Using the obtained concurrent RA information, the terminal device 108a determines that at least two TRPs 106a-106n of the NN 104 can be used for concurrent RA procedures for mTRP communication establishment. If the terminal device 108a fails to determine that more than one TRP of the multiple TRPs 106a-106n can be used, then the terminal device 108a cannot perform concurrent RA procedures for mTRP communication establishment and may revert to the conventional single RA procedure for the NN 104 and instead perform sTRP communication, where the terminal device 108a may perform mTRP communication at a later stage when more than one TRP can be used. In such a case, once more than one TRP is available for use by terminal 108a in mTRP communication, one or more further additional RA procedures may be performed to establish mTRP communication whilst the terminal 108a performs sTRP communication. If there are two or more further additional RA procedures the terminal 108a requires to establish mTRP communication, then these two or more further additional RA procedures may be performed as concurrent RA procedures as described in operations S2.5a-S2.5n and/or as described herein.

In operations S2.5a-S2.5n, when concurrent RA procedures are allowed and supported in the cell 102 of the NN 104, and when the terminal device 108a is capable of performing mTRP communication, the terminal device 108a concurrently performs at least a first RA procedure (e.g., a 2-step or 4-step RA procedure) with the NN 104 via a first TRP 106a of the cell 102, and a second RA procedure (e.g., another 2-step or 4-step RA procedure) with the NN 104 via a second TRP 106b of the cell 102. In other examples, depending on the communication requirements of the terminal device 108a, the capabilities of the terminal device 108a, and whether the NN 104 supports mTRP communication with more than two TRPs per terminal device 108a, the terminal device 108a may concurrently perform an additional one or more concurrent RA procedures (e.g., a 2-step or 4-step RA procedure) with the NN 104 via corresponding one or more additional TRPs 106n.

NN 104 and/or other network entity at the network side may be configured to coordinate the concurrent RA procedures via TRPs 106a to 106n of operations S2.5a to S2.5n to ensure that each concurrent RA procedure is linked to the same terminal device 108a and the respective TRPs 106a-106n for which each concurrent RA procedure is being performed during operations S2.5a to S2.5n. For example, the NN 104 may use a common or centralised MAC layer that interfaces with the corresponding TRPs 106a-106n (e.g., via backhaul/fronthaul/internal links with two PHY layers at respective TRPs) and is configured to track and link each of concurrent RA procedures of operations S2.5a-S2.5n for terminal 108a in relation to the respective TRPs 106a-106n the terminal 108a requires for mTRP communication. In another example, two distributed MAC layers at respective TRPs 106a-106n may coordinate their operation together with NN 104 via messaging/signalling between the TRPs 106a-106n.

The coordination of the two or more concurrent RA procedures in operations S2.5aS2.5n for terminal 108a may depend on the type of RA procedure (e.g., 2-step and/or 4-step RA procedure) being performed in each operation S2.5a-S2.5n and the type of signalling/messages being used for each type of RA procedure (e.g., centralised MAC layer or two distributed MAC layer signalling/messaging).

For each 2-step or 4-step RA procedure of the concurrent RA procedures S2.5a to S2.5n, the 2-step or 4-step messaging between the terminal device 108a and NN 104 is coordinated and configured to enable the NN 104 to detect which of the TRPs 106a-106n are being requested for mTRP communication and detect/identify the terminal 108a requesting those corresponding TRPs 106a-106n for the mTRP communication. For example, the coordination of the two or more concurrent RA procedures using either 2-step or 4-step RA procedures can be based on, without limitation, for example several scenarios: i) detecting at the NN 104 that specific/dedicated PRACH resources (e.g., specific PRACH preambles and/or PRACH occasions) assigned for mTRP communication per terminal are being used in Msg1/MsgA transmissions of the corresponding 4-step or 2-step RA procedure; or ii) detecting some further indication in the Msg3/MsgA of the corresponding 4-step or 2-step RA procedure with each TRP that a) mTRP is being requested, b) mTRP being requested for uplink communication only, downlink communication only, of both uplink and downlink communication; and/or c) identifying data for identifying the terminal 108a requesting the mTRP communication so each concurrent RA procedure being performed with a corresponding TRP is linked to the identified terminal 108a. The further indications may be included, without limitation, for example in a common CCCH SDU or a common C-RNTI MAC CE or a specific or new indication field or element (e.g., via a new RRC field in the CCCH SDU or a new MAC CE).

For example, in scenario i) for both 2-step or 4-step RA procedures, when the NN 104 detects dedicated/specific PRACH resources that are assigned for a particular mTRP communication are being used in received Msg1/MsgA of the concurrent RA procedures, then the NN 104 can identify that the concurrent RA procedures using these dedicated/specific PRACH resources relate to the same terminal 108a. In subsequent messaging for these concurrent RA procedures for the same terminal 108a the NN 104 is configured to ensure that a common temporary cell radio network temporary identifier (TC-RNTI) is assigned to the terminal 108a in relation to these identified concurrent RA procedures. For example, the common TC-RNTI may be sent in Msg2 of the corresponding 4-step RA procedure or MsgB of the corresponding 2-step RA procedure. The terminal 108a may then use the common TC-RNTI as its identifier for the concurrent RA procedures, and/or for use by the NN 104 in confirming/identifying those concurrent RA procedures are associated with the terminal 108a. This enables the NN 104 to keep track of the concurrent RA procedures and which TRPs 106a-106n will be used by the terminal 108a in the resulting mTRP communication.

In another example, in scenario ii) when using 2-step RA procedure, when mTRP communication for a particular terminal 108a is indicated in Msg3/MsgA then NN 104 can identify those concurrent RA procedures that relate to the same terminal 108a. The NN 104 may be configured to ensure that a common TC-RNTI is assigned to the terminal 108a in relation to each of the identified concurrent RA procedures. For example, the TC-RNTI may be sent in MsgB of the corresponding 2-step RA procedure. The terminal 108a may then use the common TC-RNTI as its identifier for the concurrent RA procedures, and/or for use by the NN 104 in confirming/identifying those concurrent RA procedures are associated with the terminal 108a. This enables the NN 104 to keep track of the concurrent RA procedures and which TRPs 106a-106n will be used by the terminal 108a during the resulting mTRP communication.

In an example, in scenario ii) when the terminal 108a uses the 4-step RA procedure in one or more of the concurrent RA procedures, then if dedicated/specific PRACH resources are not configured or are not available, the NN 104 is unaware that the PRACH preambles it receives from terminal 108a are related to the concurrent RA procedures S2.5a-S2.5n being performed by terminal 108a. In this scenario, the NN 104 only detects in Msg3 of the corresponding concurrent RA procedures S2.5a-S2.5n that these concurrent RA procedures are for mTRP communication in relation to terminal 108a. This means that the NN 104 will have sent in Msg2 of each 4-step RA procedure of the concurrent RA procedures S2.5a-S2.5n a different TC-RNTI to the terminal 108a, which the NN 104 has assigned to the same terminal 108a. The terminal 108a and/or NN 104 may be configured with a rule for electing one of the different TC-RNTIs for use in linking the concurrent RA procedures to the same terminal 108a and/or as a subsequent identifier of the terminal 108a. For example, typically, the TC-RNTI is used for scrambling the DCI scheduling Msg4, which comprises the CCCH SDU MAC CE for contention resolution, the terminal device 108a may include a TC-RNTI selection rule for deciding which of the different TC-RNTIs to select as C-RNTI and/or the NN 104 may include a TC-RNTI rule for selecting which of the different TC-RNTIs will be used as C-RNTI for contention resolution Msg4 of each corresponding concurrent RA procedure.

An example TC-RNTI rule performed by the terminal device 108a may include the terminal device 108a selecting one of the different TC-RNTIs, and then using the same TC-RNTI in subsequent messages of the 4-step RA procedure for the corresponding concurrent RA procedures in a manner that is detectable by the NN 104 and can associate this selected TC-RNTI as a common TC-RNTI for all the concurrent RA procedures. In another example, the TC-RNTI rule performed by the terminal device 108a may include the terminal device 108a selecting the earliest received TC-RNTI of the different TC-RNTIs that are sent by the NN 104 (e.g., there may be different propagation timing to each TRP), where the selected TC-RNTI is used as the common C-RNTI for the terminal device 108a. In another example, the NN 104 may generate a particular TC-RNTI sequence of different TC-RNTIs, the terminal device 108a may be configured using a selection algorithm and the like to select a specific TC-RNTI from the TC-RNTI sequence. The NN 104 may use the same selection algorithm to select the same TC-RNTI from the TC-RNTI sequence. The selected specific TC-RNTI may be used as the common C-RNTI for the terminal 108a and the corresponding concurrent RA procedures.

In another example, the Downlink Control Information (DCI) scheduling the Msg4 messages of the corresponding concurrent RA procedures may be scrambled by an TC-RNTI selected by the NN 104. The NN 104 implements a TC-RNTI selection rule for selecting one of the TC-RNTI of the different TC-RNTIs. The selected TC-RNTI is then used in scrambling the Msg4 of each of the corresponding concurrent RA procedures, where the terminal device 108a detects the selected TC-RNTI by trying each of the received TC-RNTIs (e.g., received in Msg2) when decoding the DCIs. The terminal device 108a selects the TC-RNTI that successfully decodes the DCIs as C-RNTI, this TC-RNTI is the selected TC-RNTI used by the NN 104 for scrambling the DCIs as C-RNTI.

In this example, in operation S2.5a the terminal device 108a performs a first RA procedure with the NN 104 via the first TRP1 106a, in operation S2.5b, the terminal device 108a performs a second RA procedure with the NN 104 via the second TRP2 106a, and in step S2.5n, the terminal device 108a continues to perform one or more further RA procedures with the NN 104 via one or more further TRPs such as further TRPN 106n of cell 102. In this example, the RA procedures of operations S2.5a-2.5n are performed concurrently such that each are triggered and performed without waiting for the previous RA procedure of operations S2.5a-S2.5b to successfully or unsuccessfully complete. This means there will be a significant reduction in delay and latency when establishing mTRP communication between the terminal device 108a and the NN 104.

Concurrently performing the first and second RA procedures may include, without limitation, for example performing the first and second RA procedures in parallel, simultaneously, or in an interleaved manner. For example, parallel or simultaneously performing the first, second, and/or N-th RA procedure may include using the same time slots but different sets of resource blocks for transmitting the respective RA messages of the first, second, and/or N-th RA procedure from the terminal device 108a via the respective uplink channels and/or from the NN 104 via the respective downlink channels. In another example, parallel or simultaneously performing the first, second, and/or N-th RA procedures may include using the same frames but different time slots/sets of resource blocks of each of the frames when transmitting the respective RA messages of the first, second, and/or N-th RA procedure from the terminal device 108a via the respective uplink channels and/or from the NN 104 via the respective downlink channels. Concurrent performance may include interleaving the performance of the first, second and/or N-th RA procedures such that the RA messages of the first RA procedure or a subset thereof are interleaved with the RA messages of the second and/or N-th RA procedure or a subset thereof.

Concurrently performing the first, second RA and/or N-th RA procedures may include the terminal device 108a triggering performance of the first RA procedure with the first TRP 106a, the terminal device 108a triggering performance of the second RA procedure with the second TRP 106b before completion of the first RA procedure, and, if any, for subsequent RA procedures the terminal device 108a triggers performance of a subsequent RA procedure with the N-th TRP 106n before completion of the immediately previously triggered RA procedure.

Although the concurrent RA procedures are described with reference to concurrently performing a first and second RA procedure with the NN via a first and second TRP, this is by way of example only, it would be appreciated by the skilled person that more than two concurrent RA procedures may be performed by the terminal device and NN using more than two TRPs (e.g., 3 or more TRPs) in which the above examples of concurrently performing RA procedures is extended to using more than three TRPs. Although 4-step RA procedure and/or 2-step RA procedure are described, this is by way of example only, it is to be appreciated by the skilled person that any other type of suitable RA procedure may be performed.

In operation S2.6, once one of the concurrent RA procedures completes successfully, the terminal device 108a performs an RRC connection establishment with the NN 104. The terminal device 108a performs mTRP communication with the NN 104 of the cell 102 via at least the first and second TRPs 106a and 106b, and/or any subsequent TRPs 106n for which an RA procedure was successfully completed.

During performance of the concurrent RA procedures for the terminal device 108a, should the RA procedure of operation S2.5a with NN 104 via the TRP 106a successfully complete before the RA procedure of operation S2.5b completes, then a single RRC connection for the terminal device 108a is established via TRP 106a, and the terminal device 108a can start performing single TRP communication. As the RA procedure of operation S2.5b with NN 104 via the second TRP 106b complete, then the terminal device 108a can start perform mTRP communication with NN via inter alia at least the first and second TRPs 106a and 106b. As any subsequent operations S2.5n complete with respect to a subsequent TRP 106n, then the terminal device 108a can perform mTRP communication with NN via inter alia the requested TRPs 106a-106n. If all but one of the RA procedures of operations S2.5a-2.5n is unsuccessful for the terminal device 108a, then the terminal device 108a can fall back to the sTRP communication. In such a case, the terminal device 108a still has the potential to move to mTRP communication at a later stage, where one or more further additional RA procedures may be performed to establish mTRP communication whilst performing sTRP communication. If there are two or more further additional RA procedures required to establish the requested mTRP communication, then these two or more further additional RA procedures may be performed as concurrent RA procedures as described with reference to FIGs. 2 to 4c.

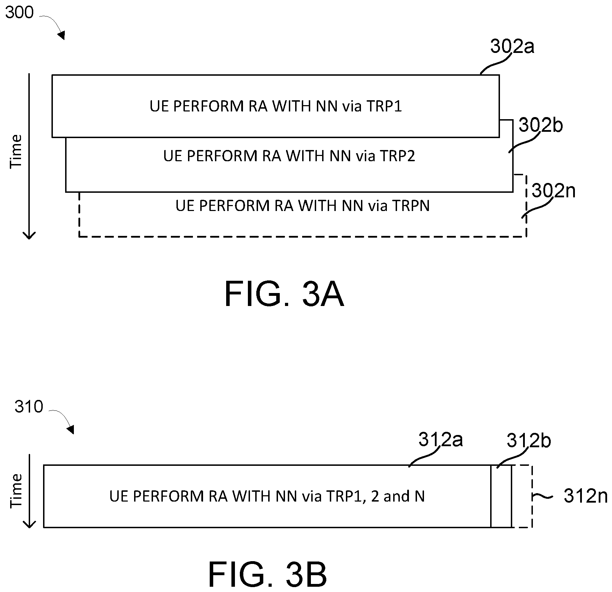

FIGs. 3a to 3b are example schematic diagrams illustrating several concurrent RA procedures for use in establishing mTRP communication between terminal device 108a and NN 104. Concurrently performing the first, second, and/or subsequent RA procedures may include, without limitation, for example performing the first, second and/or subsequent RA procedures in parallel, simultaneously or partially simultaneously or overlapping, and/or interleaving the messaging of the RA procedures.

FIG. 3a illustrates an example of concurrent RA procedures 300 in which the RA procedures are at least partially simultaneous RA procedures or overlapping RA procedures. In this example, there is a first RA procedure 302a, a second RA procedure 302b, and, optionally, an N-th RA procedure 302n. The RA procedures 302a-302N are performed concurrently such that they may be partially simultaneous or overlap over time in which each subsequent RA procedure is triggered when the previously triggered RA procedure has not yet completed. For example, the first RA procedure 302a is triggered and is performed between the terminal device 108a and the NN via a first TRP 106a, during performance of the first RA procedure 302a, the terminal device 108a triggers the second RA procedure 302b to be performed between the terminal device 108a and NN 104 via a second TRP 106b. In addition, the terminal device 108a triggers any subsequent RA procedure 302n to be performed between the terminal device 108a and NN 104 via an N-th TRP 106b. Given these RA procedures 302a, 302b and 302c are partially simultaneous or overlapping, the transmission/receiving resources may be configured to ensure some of the RA messages from each overlapping RA procedure share one or more common time slots, radio frames, and/or sub-frames, whilst using different sets of resource blocks for transmitting/receiving the respective RA messages of the first, second, and/or N-th RA procedures 302a-302n.

FIG. 3b illustrates a further example of concurrent RA procedures 310 being performed simultaneously and/or in parallel where each RA procedure may be triggered at substantially the same time or one after the other within a common time slot, or set of time slots. In this example, two or more RA procedures 312a-312n may be performed substantially simultaneously and/or in parallel. For example, once the terminal device 108a has determined mTRP communication is allowed within cell 102 operated by NN 104 and has determined the number of TRPs required for the mTRP communications based on the capability of the terminal device 108a and/or based on the support provided by the NN 104, the terminal device 108a may trigger the first RA procedure 312a, the second RA procedure 312b, and/or one or more subsequent RA procedures 312n substantially at the same time. For example, depending on the number of RBs available for each initial RA message for two or more of the RA procedures, the two or more RA procedures may be triggered within the same time slot or same set of time slots, and/or within the same radio frame/subframe and the like. This may also include interleaving RA procedure messages for each RA procedure 312a-312n with RA procedure messages for other RA procedures 312a-312n. Being able to substantially simultaneously perform the RA procedures 312a-312n means that they may complete together, which substantially reduces the time required to complete the RA procedures and hence significantly improves latency.

Although FIGs. 3a and 3b illustrate some examples of concurrent RA procedures being performed, this is by way of example only and the invention is not so limited, it is to be appreciated by the skilled person that other concurrent structures for performing concurrent RA procedures are also applicable.

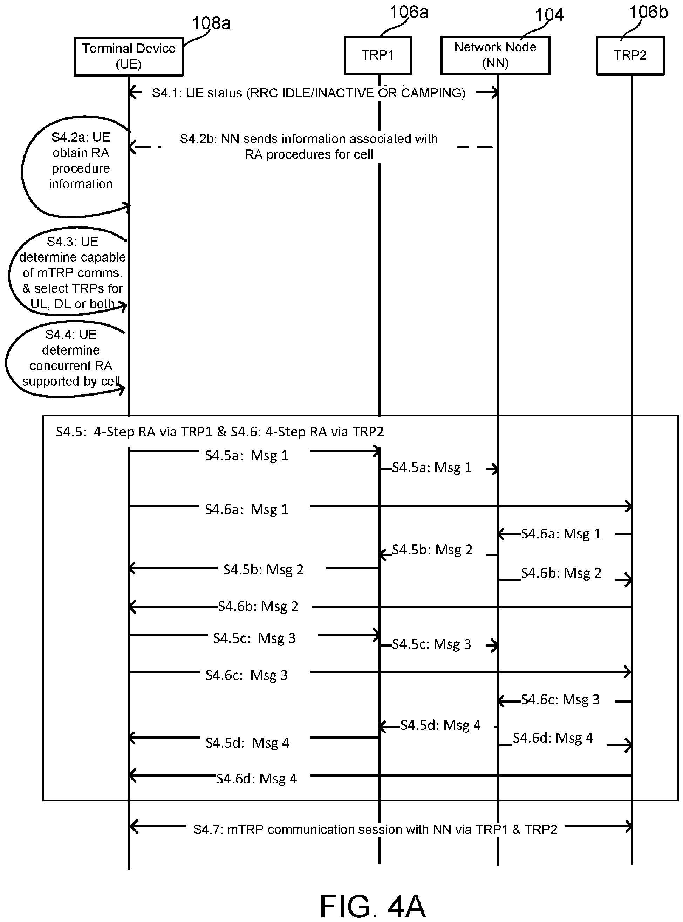

FIGs. 4a-4c are message flow diagrams illustrating various messages that may be transmitted, and operations that may be performed, for efficiently establishing mTRP communication between the terminal device 108a and NN 104 via the first and second TRPs 106a and 106b. Although these examples describe several concurrent RA scenarios being performed via first and second TRPs 106a and 106b, this is by way of example only, it is to be appreciated by the skilled person in the art that these concurrent RA scenarios may be extended for establishing mTRP communications with 3 or more TRPs in the cell operated by NN 104.

FIG. 4a is a message flow diagram illustrating establishing mTRP communication between the terminal device 108a (e.g., a UE) and the NN 104 via a first and second TRP 106a and 106b using a first 4-step RA procedure with NN 104 via the first TRP 106a, and a second 4-step RA procedure with NN 104 via the second TRP 106b. The mTRP communication between the terminal device 108a and NN 104 is established based on the following operations.

In operation S4.1, the terminal device 108a is in either an RRC_IDLE or RRC_INACTIVE state and is camping in the cell operated by NN 104.

In operation S4.2a, the terminal device 108a obtains concurrent RA procedure information associated with NN 104. In an example, as an option, in operation S4.2b, the NN 104 may transmit concurrent RA procedure information to the terminal device 108a via a broadcast transmission and/or dedicated signalling, where the concurrent RA procedure information provides an indication that mTRP communication is supported by the NN 104 and that concurrent RA procedures are allowed to be performed in the cell operated by NN 104, as well as the relevant configuration information for performing concurrent RA procedures.

For example, the concurrent RA procedure information from the NN 104 may be transmitted as, without limitation, for example system information, dedicated MAC CE signalling, or dedicated RRC signalling to the terminal device 108a that includes an indication that the terminal device 108a can initiate multiple concurrent RA procedures in the cell operated by the NN 104 for establishing mTRP communication after completing the concurrent RA procedures. Alternatively, the concurrent RA procedure information may be transmitted as system information, dedicated MAC CE signalling, or dedicated RRC signalling from another network entity or NN of the radio communication system to the terminal device 108a as part of, without limitation, for example cell re-selection information for a set of cells including the cell operating the NN 104.

In an example, the concurrent RA information may be carried as information elements in system information such as, without limitation, for example any one of minimum information block (MIB), system information block 1 (SIB1), or other system information (OSI); minimum system information including any one of MIB or SIB1; or remaining minimum system information including SIB1.

The concurrent RA information may include first information indicating that concurrent RA procedures are allowed and/or supported by the cell operated by the NN 104. This may include configuration information that indicates conditions when the terminal device 108a may initiate concurrent RA procedures.

The concurrent RA information may include second information indicating a subset of CBRA PRACH resources to be used for concurrent RA procedures for establishing mTRP communication between terminal device 108a and NN 104 via the multiple TRPs 106a-106b. The PRACH resources include, without limitation, for example PRACH preambles and/or PRACH occasions. In an example, the subset of PRACH resources is organized into groups of N PRACH resources to be used for concurrent RA procedures with N TRPs respectively, where N≥2. As an example, a dedicated set of PRACH resources may be used to indicate, by the NN 104, whether the mTRP communication for each TRP of the multiple TRPs 106a-106b applies for uplink communication only, for downlink communication only, or for both uplink communication and downlink communication. That is, the supported mTRP communication mode for each TRP of the multiple TRPs 106a-106b may be associated with the set of PRACH resources and indicated by the NN 104 for whether the corresponding TRPs may be used in mTRP communication for either uplink communication, downlink communication or both uplink and downlink communication. The terminal device 108a may indicate during the concurrent RA procedures that the mTRP communication for each TRP is for either downlink communication only, for uplink communication only, or for both uplink and downlink communications by using the respective PRACH resources. Alternatively, this may be indicated in the payload of the RA messages sent from the terminal device 108a when performing concurrent RA procedures (e.g., in Msg3 for 4-step RA procedure or MsgA for 2-step RA procedure).

In an example, reference signals, like synchronization signalling blocks (SSBs), may be grouped and the terminal device 108a can initiate one RA procedure per SSB group, where each group of SSBs may refer to each TRP of the multiple TRPs 106a-106b. Thus, a group of SSBs can be selected by the terminal device 108a for performing concurrent RA procedures with corresponding TRPs. This may be used by the NN 104 to identify the TRPs 106a-106b that the terminal device 108a selects for the concurrent RA procedures and subsequent mTRP communication.

In an example, the CBRA PRACH resources include PRACH preambles that may be associated to respective TRPs 106a-106b such that the NN 104 knows that, when receiving Msg1 or MsgA of each concurrent RA procedure, that the corresponding PRACH preambles are coming from same terminal device 108a. This is because the terminal device 108a does not include a UE identifier in Msg1 and that UE identity is only indicated in Msg3. In an example, *N* groups of PRACH preambles, for *N≥2,* may be defined for N TRPs 106a-106b respectively. The terminal device 108a can use one PRACH preamble per group simultaneously. In another example, the NN 104 associates pairs of PRACH preambles within a pool of PRACH preambles reserved for concurrent RA procedures when establishing mTRP communication. Each PRACH preamble in a pair of PRACH preambles may be used by concurrent RA procedures by terminal device 108a in relation to a corresponding pair of TRPs 106a-106b.

In addition, the system information may further provide data representative of one or more mTRP selection thresholds (e.g,. Reference Signals Received Power (RSRP) thresholds) for use by the terminal device 108a for selection of SSB resources for mTRP communication.

The concurrent RA information may further include third information indicating that the cell operated by the NN 104 operates with multiple TRPs 106a-106b. In an example, the third information may be included in system information or dedicated signalling. In an example, the third information may further indicate that the cell operated by the NN 104 supports at least two TA operation in the uplink. For example, at least two TA operation in the uplink may be indicated by data representative of multiple TAs being supported in the cell for uplink transmission to the multiple TRPs 106a-106b.

In operation S4.3, the terminal device 108a determines that it is capable of mTRP communications with two or more TRPs 106aand 106b, and when it determines that it is capable of mTRP communications, the terminal device 108a selects two or more TRPs 106a and 106b in which each TRP 106a or 106b of the two or more TRPs 106a-106b is selected for either uplink communication, downlink communication, or both uplink and downlink communication. This may depend on the capability of the terminal device 108a including, for example, the antenna arrangement of the terminal device 108a and whether the antenna arrangement of the terminal device 108a supports mTRP communication for each of the two or more TRPs 106a-106b over the uplink, downlink, or both uplink and downlink.

For example, the terminal device 108a determines that it is capable of performing mTRP communication based on determining that one of the following applies: a) an antenna arrangement the terminal device 108a is capable of simultaneously receiving signals from multiple TRPs 106a-106b for downlink communications; b) an antenna arrangement of the terminal device 108a is capable of simultaneously transmitting signals to multiple TRPs 106a-106b for uplink communications; and c) an antenna arrangement of the terminal device 108a is capable of simultaneously transmitting and receiving signals to/from multiple TRPs 106a-106b for both uplink and downlink communications.

In an example, the terminal device 108a may select suitable TRPs for mTRP communication by dynamically determining whether different antenna panels of the antenna arrangement can receive SSBs from different TRPs depending on their orientations with respect to the position of the terminal device 108a and the TRP positions of the multiple TRPs 106a-106b in the cell operated by the NN 104. For example, this may include the terminal device 108a determining, from signal measurements, that signals from a first TRP 106a and a second TRP 106b can be received simultaneously. This may enable first and second RA procedures to be performed concurrently in relation to the first TRP 106a and second TRP 106b, respectively, when the SSBs from the first TRP 106a and the second TRP can be received simultaneously.

In another example, the terminal device 108a may select suitable TRPs for mTRP communication by detecting which TRPs 106a-106b of the multiple TRPs of cell operated by NN 104 have the strongest SSBs received concurrently by the antenna arrangement of the terminal device 108a. For example, the terminal device 108a may determine the received downlink powers or strengths of the downlink SSBs that can be received concurrently from the multiple TRPs in the cell. The terminal device 108a may select those TRPs from the multiple TRPs having powers or strengths above a predetermined power threshold (e.g., an RSRP threshold). The terminal device 108a may determine from the obtained concurrent RA information one or more mTRP selection thresholds (e.g,. power level thresholds, RSRP thresholds) for use by the terminal device 108a in selecting a set of TRPs for mTRP communication. This may be used to select a candidate set of TRPs for mTRP communication. The set of TRPs selected from the candidate set of TRPs may include those TRPs with the most similar strongest received powers. For example, the difference between received RSRPs of the downlink SSBs from each TRP selected for mTRP communication may be within a threshold of each other. For example, when the powers or strengths of the SSBs from a first TRP 106a and a second TRP 106b are no more than a threshold apart from each other, then they may be considered to have a similar power or strength. In this example, the first and second TRP 106a and 106b are selected for the set of TRPs for mTRP communication. The concurrent RA procedures are performed between the terminal device 108a and NN 104 via the selected first and second TRP 106a and 106b for establishing mTRP communication between terminal device 108a and the NN 104.

In operation S4.4, the terminal device determines, from the obtained concurrent RA procedure information, whether the NN 104 supports and allows concurrent RA procedures in relation to the selected TRPs 106a-106b for corresponding uplink communication, downlink communication, or both uplink and downlink communication. For example, if the cell operated by the NN 104 supports *N*-TA in the uplink, then the terminal device can determine that *N* RA procedures may be performed concurrently, where *N*≥*2*. In another example, if the cell operated by the NN 104 does not support *N*-TA in the uplink, then the terminal device 108a can only initiate concurrent RA procedures if downlink resources are received time aligned.

In operation S4.5, when the NN 104 supports and allows concurrent RA procedures to be performed, and the terminal device 108a is capable of mTRP communication with NN 104 via at least the first TRP 106a and second TRP 106b, the terminal device 108a performs a first RA procedure, which in this example, is a first 4-step RA procedure.

In operation S4.6, when the NN 104 supports and allows concurrent RA procedures to be performed, and the terminal device 108a is capable of mTRP communication with NN 104 via at least the first TRP 106a and second TRP 106b, the terminal device 108a performs a second RA procedure, which in this example, is a second 4-step RA procedure.

The first and second RA procedures of operations S4.5 and S4.6 are performed concurrently as described with reference to FIGs. 3a and 3b in which the corresponding RA messages of the first and second 4-step RA procedures may be either transmitted in parallel or substantially simultaneously between the terminal device 108a and the NN 104, or transmitted one after the other in an interleaved manner in which the first and second RA procedures are partially simultaneous / overlapping.

The advantage of both first and second RA procedures concurrently using the 4-step RA procedure is a significant further reduction in latency compared with the conventional approach of sequentially performing the second 4-step RA procedure after the first RA procedure has completed successfully and after an RRC connection has been established with the NN 104 and appropriate configuration information for mTRP communication has been received by the terminal device 108a. Concurrently performing the first and second 4-step RA procedures reduces the time it takes the terminal device 108a to complete establishment of mTRP communication between terminal device 108a and NN 104.

In operation S4.5a, the terminal device 108a triggers transmission of a Msg1 of the first 4-step RA procedure from the terminal device 108a to the NN 104 via the first TRP 106a. In an example, the terminal device 108a transmits a first 4-step RA Msg1 to the first TRP 106a during the first RA procedure using a first PRACH resource of the subset of PRACH resources obtained from the received concurrent RA procedure for the first TRP 106a. The Msg1 may use a selected subset of PRACH resources (e.g., PRACH preamble and/or PRACH occasion) dedicated for concurrent RA procedure and indicating to the NN 104 that concurrent RA procedures are being requested or performed by the terminal 108a for establishing mTRP communication with the NN 104 via inter alia the first TRP 106a.

At the same time, in operation S4.6a, the terminal device 108a triggers transmission of a Msg1 of the second 4-step RA procedure from the terminal device 108a to the NN 104 via the second TRP 106b. In an example, the terminal device 108a transmits a second 4-step RA Msg1 to the second TRP 106b during the second RA procedure using a second PRACH resource of the subset of PRACH resources obtained from the received concurrent RA procedure for the second TRP 106a. The Msg1 may use a selected subset of PRACH resources (e.g., PRACH preamble and/or PRACH occasion) dedicated for concurrent RA procedure and indicating to the NN 104 that concurrent RA procedures are being requested by the terminal 108a for establishing mTRP communication with the NN 104 via inter alia the second TRP 106a.

In this example, it is assumed that the Msg1 of the first RA procedure is received at the NN 104 before the Msg1 of the second RA procedure. The NN 104 may include logic that identifies from Msg1 that the terminal device 108a is performing a concurrent RA procedure for establishing mTRP communications with at least two TRPs of cell operated by NN 104. The NN 104 may store the first PRACH resource (PRACH preamble and/or PRACH occasion) used by the first RA procedure so that it can associate the first RA procedure with another RA procedure performed via another TRP. Similarly, the NN 104 includes further logic that identifies from Msg1 of the second RA procedure that the terminal device 108a is performing a concurrent RA procedure for establishing mTRP communications with at least two TRPs of cell operated by NN 104. Similarly, the NN 104 may store the second PRACH resource (PRACH preamble and/or PRACH occasion) used by the second RA procedure. This assists the NN 104 to identify the TRPs 106a and 106b that the terminal device 108a intends to use for mTRP communication with NN 104.

In operation S4.5b, in response to receiving the Msg1 of the first RA procedure from terminal device 108a, the NN 104 transmits a Msg2 of the first 4-step RA procedure, in which the Msg2 includes data representative of a temporary cell radio network temporary identifier (TC-RNTI). The NN 104 will send a common TC-RNTI to the terminal device 108a for the first and second RA procedures.

In operation S4.6b, in response to receiving the Msg1 of the second RA procedure from terminal device 108a, the NN 104 transmits a Msg2 of the second 4-step RA procedure, in which the Msg2 includes the common TC-RNTI as transmitted to the terminal device 108a in the Msg2 of the first 4-step RA procedure.

In operation S4.5c, in response to receiving the Msg2 of the first 4-step RA procedure from the NN 104, the terminal device 108a transmits a Msg3 of the first 4-step RA procedure. Msg3 payload may include a common control channel (CCCH) service data unit (SDU) for transmission to the NN 104 via the first TRP 106a, which CCCH SDU including a UE identity, such as a Temporary Mobile Subscriber Identity (TMSI) or another identifier, which can be used for contention resolution. The Msg3 payload may further include indicating that mTRP communication applies for uplink communication only, for downlink communication only, or for both uplink communication and downlink communication. This may be indicated using the dedicated PRACH resource used in Msg1 of the first RA procedure indicating that mTRP communication via the first TRP 106a will be applicable for uplink communication only, for downlink communication only, or for both uplink communication and downlink communication. This depends on the capability of the terminal device 108a with respect to the first TRP 106a, which may be determined in operations S4.3 or S4.4. When the UE is already assigned a cell radio network temporary identifier (C-RNTI) the Msg3 payload may include a common C-RNTI in a MAC CE for identifying the terminal device 108a to the NN 104. In this example, the NN 104 can then map the C-RNTI with the Msg1 of the first RA procedure and hence identify that the terminal device 108a intends on using TRP 106a for mTRP communication. The terminal device 108a sets a contention resolution timer with respect to the first RA procedure for determining that the first RA procedure is successful.

In operation S4.6c, in response to receiving the Msg2 of the second 4-step RA procedure from the NN 104, the terminal device 108a transmits a Msg3 of the second 4-step RA procedure. The Msg3 payload may include the CCCH SDU used in Msg3 of the first RA procedure for transmission to the NN 104 via the first TRP 106a. Similarly, the Msg3 payload may include, in a MAC CE, the same C-RNTI as sent in Msg3 of the first 4-step RA procedure. The NN 104 can then map the C-RNTI with the Msg1 of the second RA procedure and hence identify that the terminal device 108a intends on also using TRP 106b for mTRP communication. The common CCCH SDU or the common C-RNTI assists the NN 104 for identifying the terminal device 108a to the NN 104, and for identifying which TRPs 106a and 106b that the terminal device 108a requires to use for mTRP communication with NN 104. The terminal device 108a sets a contention resolution timer with respect to the second RA procedure for determining that the second RA procedure is successful.

The Msg3 of the second 4-step RA procedure may further includes data indicating that mTRP communication via the second TRP 106b applies for either uplink communication only, for downlink communication only, or for both uplink communication and downlink communication. This may be indicated using the dedicated PRACH resources used in Msg1 of the second RA procedure indicating that mTRP communication via the second TRP 106b will be applicable for uplink communication only, for downlink communication only, or for both uplink communication and downlink communication. This depends on the capability of the terminal device 108a with respect to the first TRP 106a, which may be determined in operations S4.3 or S4.4.

In operation S4.5d, in response to receiving the Msg3 of the first RA procedure from terminal device 108a, the NN 104 transmits contention resolution Msg4 of the first 4-step RA procedure, in which the Msg4 includes a common user equipment (UE) Contention Resolution Identity (CRI) Medium Access Control (MAC) Control Element (CE) including the CCCH SDU sent in operation S4.5c. If the terminal device 108a successfully receives the Msg4 transmitted from the NN 104 via the first TRP 106a within the contention resolution time period, then the first RA procedure is successful. Otherwise, the terminal device 108a may restart the first RA procedure, and perform another first RA procedure concurrently with the remaining part of the second RA procedure.

In operation S4.6d, in response to receiving the Msg3 of the second RA procedure from terminal device 108a, the NN 104 transmits contention resolution Msg4 of the second 4-step RA procedure, in which the Msg4 includes the same data as transmitted in the Msg4 of the first 4-step RA procedure, which includes the common UE CRI MAC-CE including the CCCH SDU send in operation S4.6c. If the terminal device 108a successfully receives the Msg4 transmitted from the NN 104 via the second TRP 106b within the contention resolution time period, then the second RA procedure is successful. Otherwise, the terminal device 108a may restart the second RA procedure, and perform another second RA procedure concurrently with any remaining parts of other RA procedures being concurrently performed by the terminal device 108a.

In operation S4.7, once the terminal device 108a successfully performs the first and second RA procedures, the terminal device 108a is able to establish and perform mTRP communication with the NN 104 via the first and second TRPs 106a and 106b. Although this example described concurrent RA procedures for establishing mTRP communication using a first TRP 106a and a second TRP 106b, this is by way of example only, it is to be appreciated by the skilled person that the concurrent RA procedure outlined by the message flow diagram of FIG. 4a may be extended and applied to using three or more TRPs for mTRP communication between the terminal device 108a and NN 104, in which the terminal device 108a performs three or more concurrent RA procedures as the application demands.

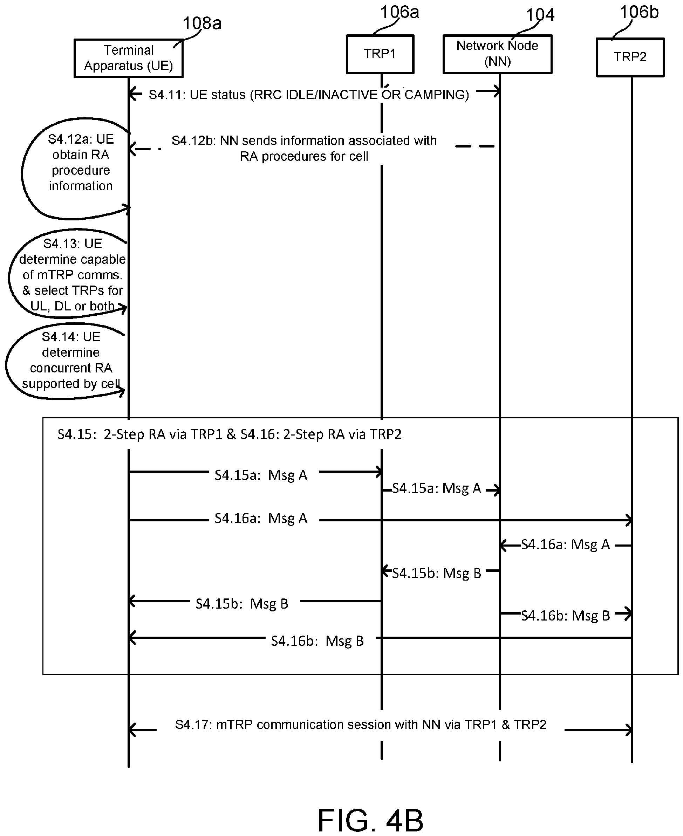

FIG. 4b is a message flow diagram illustrating establishing mTRP communication between the terminal device 108a (e.g., a UE) and the NN 104 via a first and second TRP 106a and 106b using a first 2-step RA procedure with NN 104 via the first TRP 106a and a second 2-step RA procedure with NN 104 via the second TRP 106b. The mTRP communication between the terminal device 108a and NN 104 is established based on the following operations of:
The operations S4.10 to S4.14 of FIG. 4b are the same or similar to the operations S4.1 to S4.4 of FIG. 4a.

In operation S4.15, when the NN 104 supports and allows concurrent RA procedures to be performed, and the terminal device 108a is capable of mTRP communication with NN 104 via at least the first TRP 106a and second TRP 106b, the terminal device 108a performs the first RA procedure, which in this example, is a first 2-step RA procedure.

In operation S4.16, when the NN 104 supports and allows concurrent RA procedures to be performed, and the terminal device 108a is capable of mTRP communication with NN 104 via at least the first TRP 106a and second TRP 106b, the terminal device 108a performs a second RA procedure, which in this example, is a second 2-step RA procedure.

The first and second RA procedures of operations S4.15 and S4.16 are performed concurrently as previously described with reference to FIGs. 1, 2 and/or FIGs. 3a or 3b in which the corresponding RA messages of the first and second 2-step RA procedures may be either transmitted in parallel or substantially simultaneously between the terminal device 108a and the NN 104, or transmitted one after the other in an interleaved manner in which the first and second RA procedures are partially simultaneous / overlapping.

The advantage of both first and second RA procedures concurrently using the 2-step RA procedure is a significant further reduction in latency compared with using the 4-step RA procedure of FIG. 4a. This reduces the time it takes the terminal device 108a to complete performing concurrent RA procedures and subsequent establishment of mTRP communication between terminal device 108a and NN 104.

In operation S4.15a, the terminal device 108a triggers transmission of a MsgA of the first 2-step RA procedure from the terminal device 108a to the NN 104 via the first TRP 106a. The MsgA payload includes the same or similar payload as provided in the Msg1 and Msg3 of the first 4-step RA procedure in operations S4.5a and S4.5c of FIG. 4a. On transmitting the MsgA via TRP 106a to the NN 104, the terminal device 108a sets a contention resolution timer with respect to the first RA procedure for determining that the first RA procedure is successful.

At the same time or substantially the same time, in operation S4.16a, the terminal device 108a triggers transmission of a MsgA of the second 2-step RA procedure from the terminal device 108a to the NN 104 via the second TRP 106b. The MsgA payload includes the same or similar payload as provided in the Msg1 and Msg3 of the second 4-step RA procedure in operations S4.6a and S4.6c of FIG. 4a. On transmitting the MsgA via TRP 106b to the NN 104, the terminal device 108a sets a contention resolution timer with respect to the second RA procedure for determining that the second RA procedure is successful.

In this example, it is assumed that the MsgA of the first RA procedure is received at the NN 104 before the MsgA of the second RA procedure. The NN 104 includes logic that identifies from MsgA that the terminal device 108a is performing a concurrent RA procedure for establishing mTRP communications with at least two TRPs of cell operated by NN 104. The NN 104 also identifies that the terminal device 108a, via the common CCH SDU or the common C-RNTI, will be using or intends to use TRP 106a for the mTRP communication. The NN 104 stores the common CCH SDU or the common C-RNTI received in MsgA of the first RA procedure for use to identify the other one or more TRPs 106b that the terminal device 108a intends to use for the mTRP communication. This is because the terminal device 108a uses a common CCCH SDU or a common C-RNTI for all MsgAs sent via each of the corresponding TRPs. From this, the NN 104 can identify the TRPs 106a and 106b that the terminal device 108a intends to use during the mTRP communication with NN 104 when established.

In operation S4.15b, in response to receiving the MsgA of the first RA procedure from terminal device 108a, the NN 104 transmits a MsgB of the first 2-step RA procedure. The MsgB payload includes similar or the same payload as provided in the Msg2 and Msg4 of the first 4-step RA procedure in operations S4.5b and S4.5d of FIG. 4a. If the terminal device 108a successfully receives the MsgB transmitted from the NN 104 via the first TRP 106a within the contention resolution time period, then the first RA procedure is successful. Otherwise, the terminal device 108a may restart the first RA procedure, and perform another first RA procedure with respect to TRP 106a concurrently with the remaining part of the second RA procedure.

In operation S4.16b, in response to receiving the MsgA of the second RA procedure from terminal device 108a, the NN 104 transmits a MsgB of the second 2-step RA procedure. The MsgB payload includes similar or the same payload as provided in the Msg2 and Msg4 of the second 4-step RA procedure in operations S4.6b and S4.6d of FIG. 4a. If the terminal device 108a successfully receives the MsgB transmitted from the NN 104 via the second TRP 106b within the contention resolution time period, then the second RA procedure is successful. Otherwise, the terminal device 108a may restart the second RA procedure with respect to TRP 106b, and perform another second RA procedure with respect to TRP 106b concurrently with any remaining parts of other RA procedures being concurrently performed by the terminal device 108a.

In operation S4.17, once the terminal device 108a successfully performs the first and second RA procedures, the terminal device 108a is able to establish and perform mTRP communication with the NN 104 via the first and second TRPs 106a and 106b in the same or similar manner as operation S4.7 of FIG. 4a. The terminal device 108a performs mTRP communication with the NN 104 via the first and second TRPs 106a and 106b in a similar manner as described with reference to operation S4.7 of FIG. 4a.

Although this example described concurrent RA procedures for establishing mTRP communication using a first TRP 106a and a second TRP 106b, this is by way of example only, it is to be appreciated by the skilled person that the concurrent RA procedure outlined by the message flow diagram of FIG. 4b may be extended and applied to using three or more TRPs for mTRP communication between the terminal device 108a and NN 104, in which the terminal device 108a performs three or more concurrent RA procedures as the application demands.

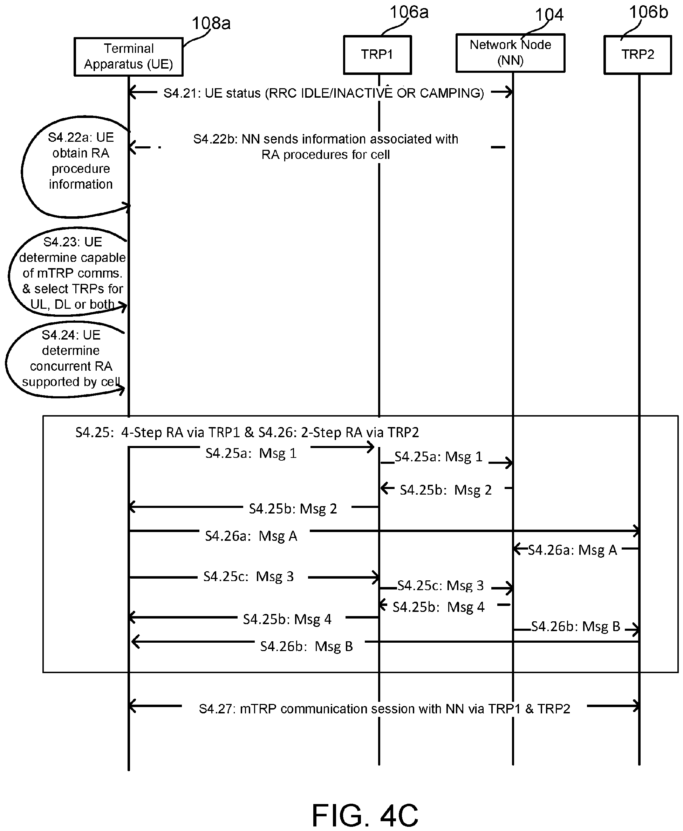

FIG. 4c is a message flow diagram illustrating establishing mTRP communication between the terminal device 108a (e.g., a UE) and the NN 104 via a first and second TRP 106a and 106b using a first 4-step RA procedure with NN 104 via the first TRP 106a and a second 2-step RA procedure with NN 104 via the second TRP 106b. The mTRP communication between the terminal device 108a and NN 104 is established based on the following operations of:
The operations S4.21 to S4.24 of FIG. 4c are the same or similar to the operations S4.1 to S4.4 of FIG. 4a.

In operation S4.25, when the NN 104 supports and allows concurrent RA procedures to be performed, and the terminal device 108a is capable of mTRP communication with NN 104 via at least the first TRP 106a and second TRP 106b, the terminal device 108a performs the first RA procedure, which in this example, is a first 4-step RA procedure.

In operation S4.26, when the NN 104 supports and allows concurrent RA procedures to be performed, and the terminal device 108a is capable of mTRP communication with NN 104 via at least the first TRP 106a and second TRP 106b, the terminal device 108a performs a second RA procedure, which in this example, is a second 2-step RA procedure.

The first and second RA procedures of operations S4.25 and S4.26 are performed concurrently as described with reference to FIGs 1, 2 and/or FIGs. 3a or 3b in which the corresponding RA messages of the first 4-step RA procedure and second 2-step RA procedure may be either transmitted in an interleaved manner or in substantially partially simultaneous / overlapping transmissions between the terminal device 108a and the NN 104 via the corresponding TRPs 106a and 106b.

The advantage of the first RA procedure using the 4-step RA procedure and the second RA procedure using the 2-step RA procedure concurrently a further reduction in latency compared with the first and second RA procedures using both using the 4-step RA procedure concurrently as described with reference to FIG. 4a. This is also a significant improvement over the conventional approach of sequentially performing each 4-step RA procedure prior to performing the next RA procedure with the corresponding TRP. Concurrently performing the first and second RA procedures reduces the time it takes the terminal device 108a to complete establishment of mTRP communication between terminal device 108a and NN 104.

In operation S4.25a, the terminal device 108a triggers transmission of a Msg1 of the first 4-step RA procedure from the terminal device 108a to the NN 104 via the first TRP 106a. The Msg1 payload may include the same or similar Msg1 payload as described in operation S4.5a of FIG. 4a.

In this example, the Msg1 of the first RA procedure is received at the NN 104 before the MsgA of the second RA procedure. The NN 104 includes logic for logging and storing the PRACH resources used by Msg1 of the first RA procedure indicating that the terminal device 108a is triggering concurrent RA procedures for establishing an mTRP communication with NN 104. From this the NN 104 expects to receive further RA messages from other concurrent RA procedures, which the NN 104 can map to the same terminal device 108a and identify the TRPs 106a and 106b that the terminal device 108a intends to use for mTRP communication on successful completion of the concurrent RA procedures.

In operation S4.25b, in response to receiving the Msg1 of the first RA procedure from terminal device 108a, the NN 104 transmits a Msg2 of the first 4-step RA procedure. The payload of Msg2 is the same or similar to that provided in Msg2 of operation S4.5b of FIG. 4a.

In operation S4.26a, after receiving Msg2 of the first 4-step RA procedure, the terminal device 108a determines Msg3 of the 4-step RA procedure, which may include a common CCCH SDU or a common C-RNTI. The terminal device 108a also triggers transmission of MsgA of the second 2-step RA procedure to the NN 104 via the second TRP 106b. The MsgA payload includes the same or similar payload of the MsgA payload in operation S4.16a of FIG. 4b, which may include the common CCCH SDU or the common C-RNTI that will also be used in Msg3 of the first RA procedure. On transmitting the MsgA via TRP 106b to the NN 104, the terminal device 108a sets a contention resolution timer with respect to the second RA procedure for determining that the second RA procedure is successful.

The NN 104 also identifies that the terminal device 108a, via the common CCCH SDU or the common C-RNTI, will be using or intends to use TRP 106b for the mTRP communication. The NN 104 stores the CCCH SDU or the C-RNTI received in MsgA of the second RA procedure for use to identify the other one or more TRPs 106a that the terminal device 108a intends to use for the mTRP communication. This is because the terminal device 108a uses a common CCCH SDU or a common C-RNTI for all Msg3 or MsgAs sent via each of the corresponding TRPs in the respective RA procedures (e.g., 4-step or 2-step RA procedures).

In operation, S4.25c, in response to receiving the Msg2 of the first 4-step RA procedure from the NN 104, the terminal device 108a transmits the Msg3 of the first 4-step RA procedure. The Msg3 payload is the same or similar to the Msg3 payload of operation S4.5c of FIG. 4a, which includes the common CCCH SDU or the common C-RNTI. The terminal device 108a sets a contention resolution timer with respect to the first RA procedure for determining that the first RA procedure is successful.

On receiving the Msg3 of the first RA procedure, the NN 104 can identify that the terminal device 108a also intends to use TRP 106a for the mTRP communication. At this stage, the NN 104 has identified that terminal device 108a intends to use TRPs 106a and 106b during the mTRP communication with NN 104 when it is established.

In operation S4.25d, in response to receiving the Msg3 of the first RA procedure from terminal device 108a, the NN 104 transmits to the terminal device 108a via the first TRP 106a contention resolution Msg4 of the first 4-step RA procedure. The Msg4 payload includes the same or similar Msg4 payload as that of operation S4.5d of FIG. 4a. If the terminal device 108a successfully receives the Msg4 transmitted from the NN 104 via the first TRP 106a within the contention resolution time period, then the first RA procedure is successful. Otherwise, the terminal device 108a may restart the first RA procedure and perform another first RA procedure concurrently with the remaining part of the second RA procedure.

In operation S4.26b, in response to receiving the MsgA of the second RA procedure from terminal device 108a, the NN 104 transmits a MsgB of the second 2-step RA procedure. The MsgB payload includes the same or similar MsgB payload as that in operation S4.16b of FIG. 4b. If the terminal device 108a successfully receives the MsgB transmitted from the NN 104 via the second TRP 106b within the contention resolution time period, then the second RA procedure is successful. Otherwise, the terminal device 108a may restart the second RA procedure with respect to TRP 106b, and perform another second RA procedure with respect to TRP 106b concurrently with any remaining parts of other RA procedures being concurrently performed by the terminal device 108a.

In operation S4.27, once the terminal device 108a successfully performs the first and second RA procedures, the terminal device 108a is able to establish and perform mTRP communication with the NN 104 via the first and second TRPs 106a and 106b in the same or similar manner as operation S4.7 of FIG. 4a. The terminal device 108a performs mTRP communication with the NN 104 via the first and second TRPs 106a and 106b in a similar manner as described with reference to operation S4.7 of FIG. 4a.

Although this example described concurrent RA procedures for establishing mTRP communication using a first TRP 106a and a second TRP 106b, this is by way of example only, it is to be appreciated by the skilled person that the concurrent RA procedure outlined by the message flow diagram of FIG. 4c may be extended and applied to using three or more TRPs for mTRP communication between the terminal device 108a and NN 104, in which the terminal device 108a performs three or more concurrent RA procedures as the application demands.

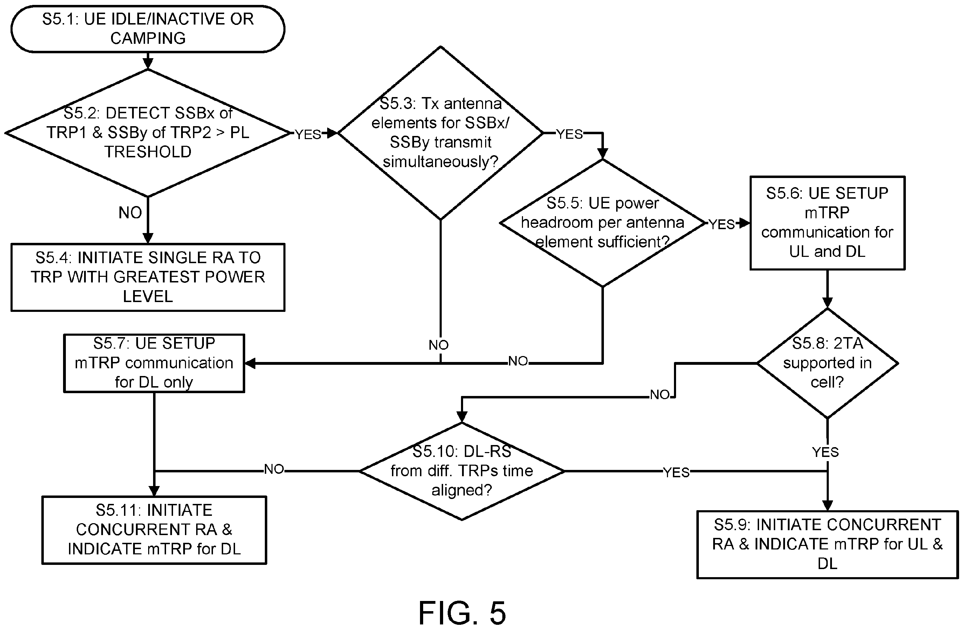

FIG. 5 is a flowchart illustrating various operations which may be performed by a terminal device in an IDLE state and/or camping on a cell in an IDLE state as described with reference to FIGs. 1a to 4c for determining that the terminal device is capable of performing mTRP communication with two of more TRPs. The operations of the flowchart of FIG. 5 are based on the operations S2.3, S2.4, S4.3, and S4.4 as described with reference to FIGs. 2 or 4a.

In operation S5.1, the terminal device is in an RRC_IDLE state and may receive concurrent RA information (e.g., system information associated with concurrent RA and/or mTRP) broadcast from the NN of the cell the terminal device is camped on. The concurrent RA information includes data indicating that mTRP communications and concurrent RA procedures are allowed and supported by the NN via multiple TRPs of the cell. The concurrent RA information may be the same or similar to the concurrent RA information as described with reference to operations S2.2a/S2.2b with reference to FIG. 2 or operations S4.2a/S4.2b of FIG. 4a. The terminal device determines from the concurrent RA information (e.g., system information) that the cell operated by NN supports at least two concurrent RA procedures (e.g., RACH procedures) and corresponding SSBs of at least two different groups in relation to concurrent RA procedures. The NN supports at least two concurrent RA procedures if initiated towards the SSBs of at least two different groups, each group representing a different TRP of at least two of the multiple TRPs of the cell.

In operation S5.1, the terminal device measures the SSBs of the at least two different groups of the at least two TRPs of the cell. For example, the terminal device may detect from signal measurements of SSBs in each group a first candidate set of SSBs for a first group corresponding to a first TRP of the multiple TRPs and a second candidate set of SSBs for a second group corresponding to a second TRP of the multiple TRPs. The terminal device determines that at least two SSBs, e.g., an SSBx of a first TRP (e.g., TRP1) and an SSBy of a second TRP (e.g., TRP2) of the different first and second groups have a power or signal strength (e.g., RSRP value) greater than a power level or signal strength threshold. The power level or signal strength threshold may be set by the NN or determined by the terminal device. The power level or signal strength threshold is used to determine if the terminal device is able to simultaneously receive SSBs from different TRPs at sufficient strength to ensure reliable mTRP communication. If an SSBx of TRP1 and an SSBy of TRP2 have a power or signal strength greater than the power level or signal strength threshold (e.g., Yes), then proceed to operation S5.3, otherwise (e.g., No) proceed to operation S5.4.

In operation S5.3, the terminal device determines that the transmitting antenna elements or the antenna arrangements of the terminal device corresponding to SSBx/SSBy are capable of simultaneously transmitting. If the corresponding transmitting antenna elements/arrangements are capable of simultaneously transmitting (e.g., Yes), then proceed to operation S5.5, otherwise (e.g., No) proceed operation S5.7.

In operation S5.4, given that there are no SSBs from at least two different groups that both have a signal strength greater than or equal to the power level threshold or signal strength threshold, then the terminal device is not able to perform mTRP communications, in which case the terminal device performs a single RA procedure for use in establishing an RRC connection with the TRP having the maximum power level of the SSBs in the candidate sets of SSBs.

In operation S5.5, the terminal device determines that the power headroom for each corresponding transmitter is sufficient. This is to ensure there is some power margin that ensures the terminal device can continue to perform simultaneous transmissions to TRP1 and TRP2 reliably. If the power headroom is not sufficient (e.g., No), then proceed to operation S5.7, otherwise (e.g., Yes) proceed to operation S5.6

In operation S5.6, given that either the antenna elements/arrangements corresponding to SSBx/SSBy can simultaneously transmit, and the terminal device has the required power headroom for simultaneous transmission per antenna element, the terminal device determines that mTRP communication can be set-up and established for both the uplink and downlinks only in respect of TRP1 and TRP2. The flow proceeds to operation S5.8.

In operation S5.7, given that either the transmit elements/arrangements corresponding to SSBx/SSBy cannot simultaneously transmit, or the terminal device does not have the required power headroom for simultaneous transmission per antenna element, then the terminal device may set-up mTRP communication in respect of TRP1 and TRP2 with respect to the downlink only, i.e., the terminal device only needs to simultaneously receive transmissions from TRP1/TRP2. The flow proceeds to operation S5.11 for initiating concurrent RA procedures with NN in respect of at least TRP1 and TRP2 of the multiple TRPs of the cell. The flow proceeds to perform concurrent RA procedures as described, without limitation, for example with reference to operations S2.5, S2.6, S4.5, S4.6, S4.15, S4.16, S4.25, and/or S4.26 with reference to FIGs. 2 and/or FIGs. 4a to 4c, and thereafter the terminal device establishes mTRP communication with NN via TRP1 and TRP2 over only the downlink.

In operation S5.8, the terminal device determines whether the NN supports at least 2 TA with respect to TRP1 and TRP2 in the cell. If the NN supports at least 2 TA with respect to TRP1 and TRP2 (e.g., Yes), then proceed to operation S5.9, otherwise proceed to operation S5.10.

In operation S5.9, the terminal device initiates concurrent RA procedures with the NN in respect of at least TRP1 and TRP2. The terminal device will indicate to the NN during each RA procedure that mTRP is to be set up and established for both uplink and the downlink in respect of TRP1 and TRP2. The flow proceeds to perform concurrent RA procedures as described, without limitation, for example with reference to operations S2.5, S2.6, S4.5, S4.6, S4.15, S4.16, S4.25, and/or S4.26 with reference to FIG. 2 and/or FIGs. 4a to 4c, and thereafter the terminal device establishes mTRP communication with NN via TRP1 and TRP2 over both the uplink and downlink thereto.

In operation S5.10, the terminal device determines that the downlink resources from different TRPs, e.g., TRP1 and TRP2, are time aligned. If they are time aligned, then the flow proceeds to operation S5.9, otherwise the flow proceeds to operation S5.11.

In operation S5.11, the terminal device initiates concurrent RA procedures with the NN in respect of at least TRP1 and TRP2. The terminal device will indicate to the NN during each RA procedure that mTRP is to be set up and established for the downlink only in respect of TRP1 and TRP2. The flow proceeds to perform concurrent RA procedures as described, without limitation, for example with reference to operations S2.5, S2.6, S4.5, S4.6, S4.15, S4.16, S4.25, and/or S4.26 with reference to FIG. 2 and/or FIGs. 4a to 4c, and thereafter the terminal device establishes mTRP communication with NN via TRP1 and TRP2 over only the downlink.

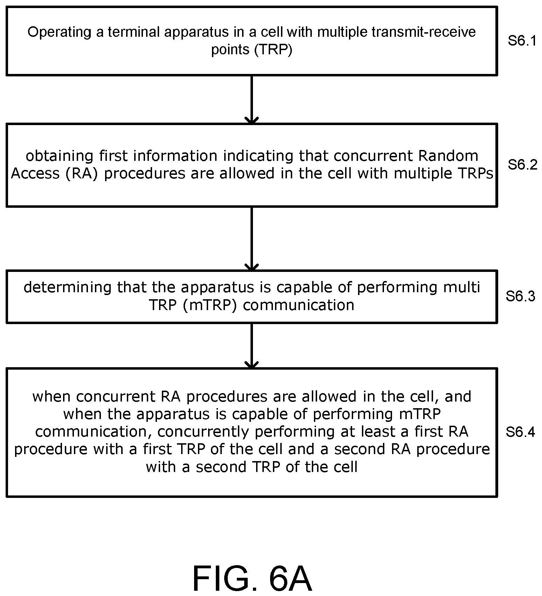

FIG. 6a is a flow diagram illustrating various operations that may be performed by a terminal device or apparatus (e.g., a UE) in a cell operated by a NN of a radio communication system. The terminal device may be similar or the same as the terminal device as described with reference to FIGs. 1 to 5. As will be appreciated, many of the operations described with reference to FIG. 6a may correspond to those described with reference to FIGs. 2, 4a to 4b and/or FIG. 5.

In operation S6.1, the terminal device starts to operate in a cell of a radio communication system from an IDLE state or an INACTIVE state whilst CAMPING in the cell operated by a NN (e.g., gNB). The cell is operated by the NN, which operates multiple TRPs (e.g., two or more TRPs). The NN is connected to a core network of the radio communication system.

In operation S6.2, the terminal device obtains concurrent RA information indicating that concurrent RA procedures are allowed in the cell of the radio communication system operating with multiple TRPs, and also the support provided by the NN in relation to mTRP communication. For example, the concurrent RA information associated with the cell and NN may be previously received from other network entities or NNs of a set of cells to which the NN belongs and is stored on the terminal device for cell selection/re-selection and the like. The terminal device may obtain the concurrent RA information associated with the cell and NN by reading the relevant memory location on the terminal device.

Alternatively or additionally, the concurrent RA information may be prestored on the terminal device, or previously received from another NN or component or network entity of the core network of the radio communication system. For example, the terminal device may have previously been camping or located within an adjacent cell and received further information associated with the concurrent RA information about NN from the NN of the previous adjacent cell.

Alternatively, the terminal device may receive, from the NN operating the cell, the concurrent RA information which indicates whether concurrent RA procedures are allowed in the cell when operating multiple TRPs for use in subsequent mTRP communication, and the support provided by NN and/or the TRPs of cell operated by the NN. The NN operating the cell may broadcast the concurrent RA information to the terminal devices in the cell from each of the multiple TRPs operated by the NN.

For example, the NN may broadcast, via one or more of the multiple TRPs, the concurrent RA information via one or more of: system information (e.g., MIB, SIB1, and/or OSI), minimum system information (e.g,. MIB and/or SIB1), remaining minimum system information (e.g., SIB1), and/or via dedicated MAC CE signalling; or dedicated RRC signalling, and/or any other suitable NR or 6G signalling as the application demands.

The concurrent RA information may be similar or the same as that described with reference to operations S2.2a, S2.2b with reference to FIG. 2, operations S4.2a, S4.2b, S4.12a, S4.12b, S4.22a, and S4.22b as described with reference to FIGs. 4a, 4b and 4c, respectively.

In operation S6.3, the terminal device determines that it is capable of performing mTRP communication with two or more TRPs of the cell operated by NN. For example, this may include the terminal device performing operations similar or the same as operations S4.3, S4.13, S4.23 as described with reference to FIGs. 4a, 4b, and 4c, respectively. This information may be transmitted to the NN of the cell during the concurrent RA procedures.

In operation S6.4, when concurrent RA procedures are allowed in the cell, and when the terminal device has determined it is capable of performing mTRP communication, the terminal device concurrently performs at least a first RA procedure with the NN via a first TRP of the multiple TRPs of the cell and a second RA procedure with the NN via a second TRP of the multiple TRPs of the cell. The first and second TRP are different TRPs of the multiple TRPs of the cell.

As will of course be appreciated that operation S6.4 may be similar to or the same as described with reference to those operations S4.5, 4.6, S4.15, S4.16, S4.25 and S4.26 performed by the terminal device 108a of FIGs. 4a to 4c.

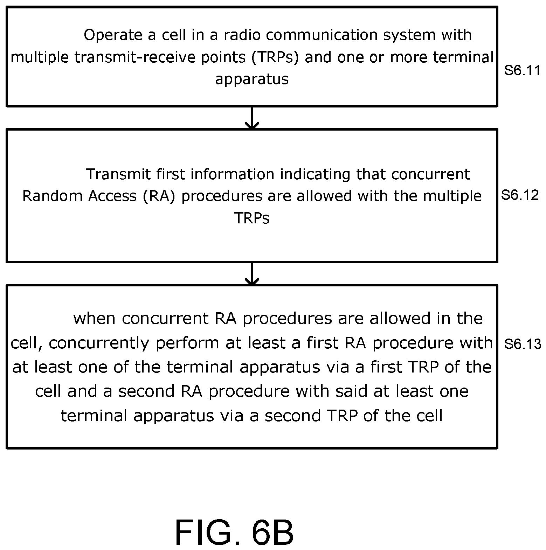

FIG. 6b is a flow diagram illustrating various operations that may be performed by a network node (e.g., a gNB) in a cell operated by the network node (NN) of a radio communication system. The NN may be similar or the same as the NN as described with reference to FIGs. 1 to 4c or 6a. The cell operated by NN may include one or more terminal devices with the functionality as described with reference to FIG. 6a. The terminal device may be similar or the same as the terminal device as described with reference to FIGs. 1 to 5. As will be appreciated, many of the operations described with reference to FIG. 6b may correspond to those described with reference to FIG. 2 and/or FIGs. 4a to 4c.

In operation S6.11, the NN operates a cell in the radio communication system with multiple TRPs and one or more terminal devices. The NN may be connected to a core network of the radio communication system.

In operation S6.12, the NN transmits concurrent RA information indicating that concurrent RA procedures are allowed in the cell of the radio communication system. The concurrent RA information may further include the support provided by NN for providing concurrent RA procedures and/or mTRP communication via multiple TRPs of the cell.

The NN may broadcast, via one or more of the multiple TRPs, the concurrent RA information via one or more of: system information (e.g., MIB, SIB1, and/or OSI), minimum system information (e.g,. MIB and/or SIB1), remaining minimum system information (e.g., SIB1), and/or via dedicated MAC CE signalling; or dedicated RRC signalling, and/or any other suitable NR or 6G signalling as the application demands.

The concurrent RA information may be similar or the same as that described with reference to operations S2.2a, S2.2b with reference to FIG. 2, operations S4.2a, S4.2b, S4.12a, S4.12b, S4.22a, and S4.22b as described with reference to FIGs. 4a, 4b and 4c, respectively.

In operation S6.13, when concurrent RA procedures are allowed in the cell, concurrently performing at least a first RA procedure with the terminal apparatus via a first TRP of the cell and a second RA procedure with the terminal apparatus via a second TRP of the cell

As will of course be appreciated, operation S6.13 may be similar to or the same as described with reference to those operations S4.5, 4.6, S4.15, S4.16, S4.25 and S4.26 performed by the NN 104 of FIGs. 4a to 4c.

With reference to FIGs. 6a or 6b concurrently performing the first and second RA procedures may include, without limitation, for example performing the first and second RA procedures in parallel, simultaneously, interleaving RA messages of the first and second RA procedures over difference resource blocks of the same time slot or same radio frame. For example, parallel or simultaneously performing the first and second RA procedure may include using the same time slots but different sets of resource blocks for transmitting the respective RA messages of the first or second RA procedure from the terminal device via the respective uplink channels and/or from the NN via the respective downlink channels. In another example, parallel or simultaneously performing the first and second RA procedure may include within the same radio frames but different time slots/sets of resource blocks of the radio frame when transmitting the respective RA messages of the first or second RA procedure from the terminal device via the respective uplink channels and/or from the NN via the respective downlink channels. Concurrent performance may include interleaving the performance of the first and second RA procedures such that when the RA messages of the first RA procedure or a subset thereof are interleaved with the RA messages of the second RA procedure or a subset thereof.

Concurrently performing the first and second RA procedures may include triggering performance of the first RA procedure with the first TRP, and triggering performance of the second RA procedure with the second TRP before completion of the first RA procedure.

Although the concurrent RA procedures are described with reference to concurrently performing a first and second RA procedure with the NN via a first and second TRP, this is by way of example only, it would be appreciated by the skilled person that more than two concurrent RA procedures may be performed by the terminal device and NN using more than two TRPs (e.g., 3 or more TRPs) in which the above examples of concurrently performing RA procedures is extended to using more than three TRPs. Although 4-step RA procedure and/or 2-step RA procedure are described, this is by way of example only, it is to be appreciated by the skilled person that any other type of suitable RA procedure may be performed.

Once the first and second concurrent RA procedures (and/or any one or more subsequent concurrent RA procedures) have completed successfully, the terminal device may perform mTRP communications with the NN of the cell via at least the first and second TRPs (and/or any one or more other TRPs in relation to one or more other concurrent RA procedures).

As well, any combination of different types of RA procedures may be implemented concurrently as the application demands. In an example, the first RA procedure is a 4-step RA procedure or a 2-step RA procedure, and the second RA procedure is a 4-step RA procedure or a 2-step RA procedure. In another example, the first RA procedure is a 4-step RA procedure performed with respect to the first TRP and the second RA procedure is a 4-step RA procedure performed with respect to the second TRP. In another example, the first RA procedure is a 4-step RA procedure performed with respect to the first TRP and the second RA procedure is a 2-step RA procedure performed with respect to the second TRP. In a further example, the first RA procedure is a 2-step RA procedure performed with respect to the first TRP and the second RA procedure is a 4-step RA procedure performed with respect to the second TRP. For example, the first RA procedure is a 2-step RA procedure performed with respect to the first TRP and the second RA procedure is a 2-step RA procedure performed with respect to the second TRP.

Although 2-step RA procedures and 4-step RA procedures are described herein, this is by way of example only, it is to be appreciated by the skilled person that any other suitable RA procedure may be concurrently performed as the first or second RA procedures as described herein, and/or as any one or more subsequent RA procedures, some of which may be performed concurrently with at least one of the first or second RA procedures and the like as the application demands.

### Example Configurations of Apparatuses

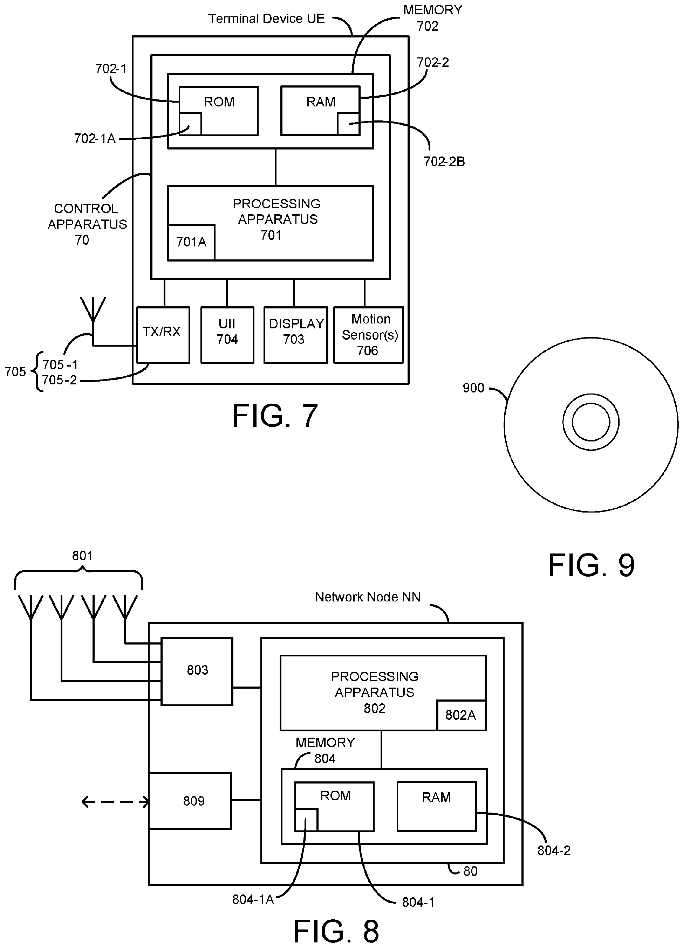

FIG. 7 is a schematic illustration of an example configuration of a terminal device or UE which may be configured to perform various operations described with reference to FIGs. 1 to 6a.

The terminal device may communicate, e.g. with a network node or base station, via an appropriate radio interface arrangement 705. The interface arrangement 705 may be provided for example by means of a radio part 705-2 (e.g. a transceiver) and an associated antenna arrangement 705-1. The antenna arrangement 705-1 may be arranged internally or externally to the terminal device. In order to be able to utilise beam forming, the antenna arrangement 705-1 includes multiple antennas. For instance, some UE's may include twelve antenna elements, e.g. four panels each having four cross-polarized antenna elements.

The terminal device comprises a controller/control (or processing) apparatus 70 which is operable to control the other components of the terminal device in addition to performing any suitable combinations of the operations described in connection with terminal device with reference to the preceding FIGs 1 to 6a. The control apparatus 70 may comprise processing apparatus 701 and memory 702. Computer-readable code 702-1A may be stored on the memory 702, which when executed by the processing apparatus 701, causes the control apparatus 70 to perform any of the operations described herein in relation to the terminal device.

Example configurations of the memory 702 and processing apparatus 701 will be discussed in more detail below.

The terminal device may be, for example, a device that does not need human interaction, such as an entity that is involved in Machine Type Communications (MTC) or Internet of Things (IoT) devices and the like. Alternatively, the terminal device may be a device designed for tasks involving human interaction such as making and receiving phone calls between users and streaming multimedia or providing other digital content to a user. Non-limiting examples for the terminal device include a UE, a smart phone, a laptop, a smartwatch, a tablet computer, an e-reader, sensor device, IoT device or apparatus, a vehicle-based terminal device or apparatus, such as those mounted on cars, buses, uncrewed aerial vehicles (UAVs) or robots, aeroplanes, trains, or boats, any type of terminal device or apparatus that may be carried by a user or worn on their person, any type of terminal device or apparatus that may be incorporated with, installed on, or comprise a component of a vehicle or other hardware and the like.

Where the terminal device is a device designed for human interaction, the user may control the operation of the terminal device by means of a suitable user input interface UII 704 such as keypad, voice commands, touch sensitive screen or pad, combinations thereof or the like. A display 703, a speaker and a microphone may also be provided. Furthermore, the terminal device may comprise appropriate connectors (either wired or wireless) to other devices and/or for connecting external accessories, for example hands-free equipment, thereto. The terminal device may additionally be associated with (e.g., comprises or is in short range wired or wireless communication with) one or a plurality of motion sensors 706 for sensing motion of the mobile device. The terminal device may additionally include other sensors such as a GNSS unit.

FIG. 8 is a schematic illustration of an example configuration of a network node (NN) which may be configured to perform various operations described with reference to FIGs. 1 to 6b. As described above, the NN may be a base station, such as a gNodeB or gNB. In some examples, the NN may include communication interface or a wireless interface (e.g., one or more TRPs) via which to communicate with terminal devices or UEs. The NN may therefore also be TRP. In such examples, the NN may, as depicted in FIG. 8, comprise a radio frequency antenna array 801 configured to receive and transmit radio frequency signals. Although the NN is shown as having an array 801 of four antennas, this is illustrative only. The number of antennas may vary from two to many hundreds. The NN further comprises radio frequency interface circuitry 803 configured to interface between the antenna 801 and a control apparatus 80. The radio frequency interface circuitry 803 may also be known as a transceiver.

The NN also comprises one or more interfaces 809 via which it can communicate with TRPs, other base stations, and other network entities such as those of the core network.

The NN control apparatus 80 may be configured to cause the exchange of information with other network elements via the interface 809. In addition, the NN control apparatus 80 may be configured to process signals from the radio frequency interface circuitry 803, control the radio frequency interface circuitry 803 to generate suitable RF signals to communicate information to the terminal devices via the wireless communications link.

The network node control apparatus 80 may comprise processing apparatus 802 and memory 804. Computer-readable code 804-1A may be stored on the memory 804, which when executed by the processing apparatus 802, causes the control apparatus 80 to perform any of the operations for concurrent RA procedures for with one or more terminal devices via two or more TRPs for subsequent mTRP communication with the one or more terminal devices as the described above.

As discussed above, in some examples the NN may be distributed over more than one network/virtual entities (e.g. centralized units, CU, distributed units, DU, and remote radio heads, RRH) which host different network functions or protocol layers. In addition, as should of course be appreciated, the entities UE, NN shown in each of FIGs. 7 and 8 described above may comprise further elements which are not directly involved with processes and operations in respect of which this application is focussed.

Some further details of components and features of the above-described apparatus/entities/apparatuses and alternatives for them will now be described.

The control apparatuses 70, 80 may comprise processing apparatus 701, 802 communicatively coupled with memory 702, 804, respectively. The memory 702, 804 has computer readable instructions 702-1A, 804-1A stored thereon, which when executed by the processing apparatus 701, 802 causes the control apparatus 70, 80 to cause performance of various ones of the operations described herein. The control apparatus 70, 80 may in some instances be referred to, in general terms, as "apparatus".

The processing apparatus 701, 802 may be of any suitable composition and may include one or more processors 701A, 802A of any suitable type or suitable combination of types. For example, the processing apparatus 701, 802 may be a programmable processor that interprets computer program instructions 702-1A, 804-1A and processes data. The processing apparatus 701, 802 may include plural programmable processors. Alternatively, the processing apparatus 701, 802 may be, for example, programmable hardware with embedded firmware. The processing apparatus 701, 802 may be termed processing means. The processing apparatus 701, 802 may alternatively or additionally include one or more Application Specific Integrated Circuits (ASICs). In some instances, processing apparatus 701, 802 may be referred to as computing apparatus.

The processing apparatus 701, 802 is coupled to the memory (which may be referred to as one or more storage devices) 702, 804 and is operable to read/write data to/from the memory 702, 804. The memory 702, 804 may comprise a single memory unit or a plurality of memory units, upon which the computer readable instructions (or code) 702-1A, 804-1A is stored. For example, the memory 702, 804 may comprise both non-volatile memory 702-1, 804-1 and volatile memory 702-2, 804-2. For example, the computer readable instructions/program code 702-1A, 804-1A may be stored in the non-volatile memory 702-1, 804-1 and may be executed by the processing apparatus 701, 702 using the volatile memory 702-2, 704-2 for temporary storage of data or data and instructions. In some examples, a transmission buffer 702-2B of the terminal device may be constituted by volatile memory 702-1 of the control apparatus 70. Examples of volatile memory include RAM, DRAM, and SDRAM etc. Examples of non-volatile memory include ROM, PROM, EEPROM, flash memory, optical storage, magnetic storage, etc. The memories in general may be referred to as non-transitory computer readable memory media.

The term 'memory', in addition to covering memory comprising both non-volatile memory and volatile memory, may also cover one or more volatile memories only, one or more non-volatile memories only, or one or more volatile memories and one or more non-volatile memories.

The computer readable instructions/program code 702-1A, 804-1A may be preprogrammed into the control apparatus 70, 80. Alternatively, the computer readable instructions 702-1A, 804-1A may arrive at the control apparatus 70, 80 via an electromagnetic carrier signal or may be copied from a physical entity 900 such as a computer program product, a memory device or a record medium such as a CD-ROM or DVD an example of which is illustrated in Fig. 9. The computer readable instructions 702-1A, 804-1A may provide the logic and routines that enables the entities devices/apparatuses to perform the functionality described above. The combination of computer-readable instructions stored on memory (of any of the types described above) may be referred to as a computer program product.

Embodiments of the technology described herein may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing apparatus" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

If desired, the different functions discussed herein may be performed in a different order and/or concurrently with each other. Furthermore, if desired, one or more of the above-described functions may be optional or may be combined. Similarly, it will also be appreciated that flow diagrams described herein are examples only and that various operations depicted therein may be omitted, reordered and or combined.

Although the methods and apparatuses have been described in connection with a New Radio (NR) network, it will be appreciated that they are not limited to such networks and are applicable to radio networks of various different types.

Although various aspects of the methods and apparatuses described herein are set out in the independent claims, other aspects may comprise other combinations of features from the described embodiments and/or the dependent claims with the features of the independent claims, and not solely the combinations explicitly set out in the claims.

It is also noted herein that while various examples are described above, these descriptions should not be viewed in a limiting sense. Rather, there are several variations and modifications which may be made without departing from the scope of the present invention as defined in the appended claims.

## Claims

1. An apparatus comprising:
means for obtaining first information indicating that concurrent Random Access, RA, procedures are allowed in a cell of a radio communication system operating with multiple transmit-receive points, TRPs;
means for determining that the apparatus is capable of performing multi transmit-receive point, mTRP, communication; and
means for, when concurrent RA procedures are allowed in the cell, and when the apparatus is capable of performing mTRP communication, concurrently performing at least a first RA procedure with a first TRP of the cell and a second RA procedure with a second TRP of the cell.

2. The apparatus of claim 1, wherein concurrently performing the first and second RA procedures comprises triggering performance of the first RA procedure with the first TRP, and triggering performance of the second RA procedure with the second TRP before completion of the first RA procedure.

3. The apparatus of claims 1 or 2, wherein the first RA procedure is a 4-step RA procedure or a 2-step RA procedure, and the second RA procedure is a 4-step RA procedure or a 2-step RA procedure.

4. The apparatus of claim 3, wherein the apparatus further comprises means for indicating, in a 4-step RA Msg3 or 2-step RA MsgA of the first and/or second RA procedure, that mTRP communication applies for uplink communication only, for downlink communication only, or for both uplink communication and downlink communication.

5. The apparatus of claims 3 or 4, wherein the apparatus further comprises means for receiving a common temporary cell radio network temporary identifier, TC-RNTI, in a first 4-step RA Msg2 or 2-step RA MsgB received from the first TRP during the first RA procedure, and in a second 4-step RA Msg2 or 2-step RA MsgB received from the second TRP during the second RA procedure.

6. The apparatus of any of claims 3 to 5, wherein the apparatus further comprises means for sending a common cell radio network temporary identifier, C-RNTI, in a first 4-step RA Msg3 or 2-step RA MsgA to the first TRP, and in a second 4-step RA Msg3 or 2-step RA MsgA to the second TRP.

7. The apparatus of any of claims 3 to 6, wherein the apparatus further comprises means for sending a common control channel, CCCH, service data unit, SDU, in a first 4-step RA Msg3 or 2-step MsgA transmitted to the first TRP during the first RA procedure, and in a second 4-step RA Msg3 or 2-step MsgA transmitted to the second TRP during the second RA procedure.

8. The apparatus of any of claims 3 to 7, wherein the apparatus further comprises means for receiving a common user equipment, UE, contention resolution identity medium access control, MAC, control element, CE, comprising a common control channel, CCCH, service data unit, SDU, in a first 4-step RA Msg4 or 2-step MsgB received from the first TRP during the first RA procedure, and in a second 4-step RA Msg4 or 2-step MsgB received from the second TRP during the second RA procedure.

9. The apparatus of any of claims 3 to 8, wherein the apparatus further comprises means for obtaining second information indicating a subset of physical random access channel, PRACH, resources to be used for concurrent RA procedures, and
means for transmitting a first 4-step RA Msg1 or 2-step RA MsgA to the first TRP during the first RA procedure using a first PRACH resource of the subset of PRACH resources, and a second 4-step RA Msg1 or 2-step RA MsgA to the second TRP during the second RA procedure using a second PRACH resource of the subset of PRACH resources.

10. The apparatus of any preceding claim, wherein the apparatus further comprises means for obtaining third information indicating that the cell operates with multiple TRPs.

11. The apparatus of any preceding claim, wherein determining that the apparatus is capable of performing mTRP communication further comprises determining that one of the following applies:
a) an antenna arrangement of the apparatus is capable of simultaneously receiving signals from multiple TRPs for downlink communications;
b) an antenna arrangement of the apparatus is capable of simultaneously transmitting signals to multiple TRPs for uplink communications; and
c) an antenna arrangement of the apparatus is capable of simultaneously transmitting and receiving signals to/from multiple TRPs for both uplink and downlink communications.

12. The apparatus of any preceding claim, wherein the apparatus further comprises means for determining, from signal measurements, that signals from the first TRP and the second TRP can be received simultaneously, and
wherein the first RA procedure and the second RA procedure are performed concurrently when the signals from the first TRP and the second TRP can be received simultaneously.

13. The apparatus of claim 12, wherein the first RA procedure and the second RA procedure are performed concurrently when powers or strengths of the signals from the first TRP and the second TRP are above a threshold and/or when powers or strengths of the signals from the first TRP and the second TRP are no more than a threshold apart from each other.

14. The apparatus of any preceding claim, wherein the first information and/or the second information and/or the third information are obtained via one or more of:
- system information;
- minimum system information;
- remaining minimum system information;
- dedicated MAC CE signalling; or
- dedicated RRC signalling.

15. A network apparatus comprising:
means for transmitting first information indicating that concurrent Random Access, RA, procedures are allowed in a cell of a radio communication system operating with multiple transmit-receive points, TRPs; and
means for, when concurrent RA procedures are allowed in the cell, concurrently performing at least a first RA procedure with a terminal apparatus via a first TRP of the cell and a second RA procedure with the terminal apparatus via a second TRP of the cell.
